# EUROPEAN PATENT APPLICATION

(11) **EP 3 641 203 A1**
(43) Date of publication of application: **22.04.2020**
(21) Application number: 18818228.1
(22) Date of filing: 15.05.2018
(51) Int. Cl.: H04L 5/00, H04W 72/04

(54) **BEAM MANAGEMENT METHOD, NETWORK DEVICE AND TERMINAL**

(30) Priority: 16.06.2017 CN 201710459346
(71) Applicant: China Academy of Telecommunications Technology, Hai Dian District Beijing 100191 (CN)
(72) Inventor: HUANG, Qiuping, Beijing 100191 (CN); GAO, Qiubin, Beijing 100191 (CN); CHEN, Runhua, Beijing 100191 (CN); RAKESH, Tamrakar, Beijing 100191 (CN); SU, Xin, Beijing 100191 (CN); LI, Hui, Beijing 100191 (CN); WANG, Mengjun, Beijing 100191 (CN); LI, Chuanjun, Beijing 100191 (CN)
(74) Representative: Nony
(86) International application number: PCT/CN2018/086925
(87) International publication number: WO 2018/228119

(57) **Abstract**

Disclosed are a beam management method, a network device and a terminal. The method comprises: the network device allocates an SRS source to a terminal; and the network device transmits indication information to the terminal, wherein the indication information is used for indicating the terminal to select a transmission beam used for transmitting SRS on the SRS source, so as to manage the transmission beam of the terminal and a receiving beam of a base station more flexibly and effectively, thereby achieving scanning of the transmission beam of the terminal and/or the receiving beam of the base station.

## Description

The application claims the benefit of Chinese Patent Application No. 201710459346.1, filed with the Chinese Patent Office on June 16, 2017, and entitled "BEAM MANAGEMENT METHOD, NETWORK DEVICE, AND USER EQUIPMENT", which is hereby incorporated by reference in its entirety.

### Field

The present invention relates to the field of communications, and particularly to a method for managing an Multi-Input Multi-Output (MIMO) channel beam, a network device, and user equipment.

### Background

In view of the importance of the MIMO technologies to the improvement of a peak rate, and the improvement of the utilization ratio of system spectrums, radio access technical standards, such as the Long Term Evolution (LTE) and LTE-advanced (LTE-A) have been built based upon the MIMO technologies plus the Orthogonal Frequency Division Multiplexing (OFDM) technologies. A performance gain of the MIMO technologies stems from a space freedom available to a multi-antenna system, so the most important evolvement aspect of the MIMO technologies being standardized is an extended number of dimensions.

In the LTE Rel-8, at most four layers of MIMO transmission can be supported. The LTE Rel-9 is focused on the enhanced Multi-User MIMO (MU-MIMO) technologies, where at most four downlink data layers can be supported for MU-MIMO transmission in the Transmission Mode (TM)-8. In the LTE Rel-10, a support of eight antenna ports is introduced to further improve the space resolution of channel state information, and a transmission capacity of Single-User MIMO (SU-MIMO) is further extended to at most eight data layers. In the LTE Rel-13 and Rel-14, the Full-Dimension MIMI (FD-MIMO) technologies are introduced to support 32 ports to thereby achieve full-dimension and vertical beam-forming.

In order to further improve the MIMO technologies, the massive-array-of-antennas technologies are introduced to a mobile communication system. For a base station, all-digital massive array of antennas can include 128, 256 or 512 antenna elements, and 128, 256 or 512 transceivers, where each antenna element is connected with one of the transceivers. Pilot signals of 128, 256 or 512 antenna ports are transmitted so that UE measures and feeds back channel state information. The UE can also be configured with an array of antennas including 32 or 64 antenna elements. There is a significant beam-forming gain due to beam-forming at both the base station side and the UE side to thereby compensate for signal attenuation arising from a path loss. There is an extremely limited coverage area of a radio signal due to a path loss particularly during communication in a high frequency band, e.g., at the frequency 30GHz. The coverage area of a radio signal can be extended to a reachable area using the massive-array-of-antennas technologies.

In a New Radio (NR) system, in order to achieve a beam-forming gain for the base station and the UE, the beam-forming of the transmitting beam of the UE should be considered when the UE transmit in the uplink. In order to manage uplink beams, the base station can configure the UE with one or more Sounding Reference Signal (SRS) resources. The UE transmits an SRS signal using one or more transmitting (Tx) beams over each SRS resource.

In order to optimize the beam-forming gain for the base station and the UE, transmitting beams of the UE, and receiving beams of the base station should be managed for uplink transmission to thereby optimize the transmitting beams and the receiving beams. In the existing protocol and communication system, there is no beam management indication information transmitted by the network side to the UE. If the network side can transmit some transmitting beam indication information to the UE, then the transmitting beams of the UE and the receiving beams of the base station may be swept more flexibly and efficiently.

### Summary

Embodiments of the invention provide a beam management method, a network device, and user equipment so as to manage transmitting beams of the UE, and receiving beams of an base station more flexibly and efficiently to thereby sweep the transmitting beams of the UE, and/or the receiving beams of the base station.

In a first aspect, an embodiment of the invention provides a beam management method, the method being applicable to a network device, and including:
configuring, by the network device, user equipment with an SRS resource; and
transmitting, by the network device, indication information to the user equipment to indicate the user equipment to select a transmitting beam for transmitting an SRS over the SRS resource.

Optionally the indication information includes information indicating a zero state, and the zero state characterizes that the user equipment determines a transmitting beam for the user equipment to transmit the SRS over the SRS resource.

Optionally the indication information includes information indicating the user equipment to transmit the SRS over the SRS resource according to a transmitting beam indicated by the network device.

Optionally the indication information includes information indicating the user equipment to transmit the SRS over the SRS resource using a transmitting beam in a transmitting beam group, where the transmitting beam group corresponds to the transmitting beam indicated by the network device.

Optionally the indication information includes information indicating the user equipment to transmit the SRS over the SRS resource using the transmitting beam indicated by the network device.

Optionally the indication information further includes identification information of the transmitting beam indicated by the network device.

Optionally the indication information is encoded as one code state.

Optionally the method further includes: pre-agreeing by the network device with the user equipment on that the user equipment transmits the SRS over the SRS resource using a transmitting beam in a transmitting beam group, where the indication information includes identification information of the transmitting beam for transmitting an SRS over the SRS resource, and the transmitting beam group corresponds to a transmitting beam indicated by the network device.

Optionally the method further includes: pre-agreeing by the network device with the user equipment on that the user equipment transmits the SRS over the SRS resource using a transmitting beam indicated by the network device, where the indication information includes identification information of the transmitting beam for transmitting the SRS over the SRS resource.

Optionally the method further includes: receiving, by the network device, the SRSs transmitted by the user equipment over the SRS resources, over the SRS resources using a same receiving beam.

Optionally the method further includes: receiving, by the network device, the SRSs transmitted by the user equipment over the SRS resources, over the SRS resources using different receiving beams.

Optionally the indication information further indicates that the SRS resources configured by the network device for the user equipment are grouped.

Optionally the method further includes: receiving, by the network device, the SRSs over the SRS resources in a same group using a same receiving beam, and receiving the SRSs over the SRS resources in different groups using different receiving beams.

Optionally the identification information of the transmitting beam is SRS Resource Indicator (SRI) information of the SRS resource configured by the network device for the user equipment.

In a second aspect, an embodiment of the invention provides a beam management method, the method being applicable to user equipment, and including:
receiving, by the user equipment, indication information transmitted by a network device, where the indication information indicates the user equipment to select a transmitting beam for transmitting an SRS over an SRS resource configured by the network device for the user equipment;
determining, by the user equipment, a transmitting beam for the user equipment to transmit the SRS over the SRS resource, according to the indication information transmitted by the network device; and transmitting the SRS over the SRS resource using the transmitting beam.

Optionally the indication information includes information indicating a zero state, and the zero state characterizes that the user equipment determines a transmitting beam for the user equipment to transmit the SRS over the SRS resource.

Optionally the transmitting, by the user equipment, an SRS over the SRS resource using the transmitting beam includes: transmitting, by the user equipment, SRSs over the different SRS resources using different transmitting beams.

Optionally the indication information includes information indicating the user equipment to transmit the SRS over the SRS resource according to a transmitting beam indicated by the network device.

Optionally the indication information includes information indicating the user equipment to transmit the SRS over the SRS resource using a transmitting beam in a transmitting beam group, where the transmitting beam group corresponds to the transmitting beam indicated by the network device.

Optionally the indication information includes information indicating the user equipment to transmit the SRS over the SRS resource using the transmitting beam indicated by the network device.

Optionally the indication information further includes identification information of the transmitting beam indicated by the network device.

Optionally the indication information is encoded as one code state.

Optionally the method further includes: pre-agreeing by the user equipment with the network device on that the user equipment transmits the SRS over the SRS resource using a transmitting beam in a transmitting beam group, where the indication information includes identification information of the transmitting beam for transmitting an SRS over the SRS resource, and the transmitting beam group corresponds to a transmitting beam indicated by the network device.

Optionally the method further includes: pre-agreeing by the user equipment with the network device on that the user equipment transmits the SRS over the SRS resource using a transmitting beam indicated by the network device, where the indication information includes identification information of the transmitting beam for transmitting the SRS over the SRS resource.

Optionally the user equipment transmits an SRS over the SRS resource using a transmitting beam in a transmitting beam group, where the transmitting beam group corresponds to the transmitting beam indicated by the network device.

Optionally the indication information further indicates that the SRS resources configured by the network device for the user equipment are grouped.

Optionally the user equipment transmits SRSs over different SRS resources a same SRS resource group using different receiving beams.

In a third aspect, an embodiment of the invention provides a network device for managing a beam, the network device including:
a configuring module configured to configure user equipment with an SRS resource; and
a transmitting module configured to transmit indication information to the user equipment to indicate the user equipment to select a transmitting beam for transmitting an SRS over the SRS resource.

Optionally the indication information includes information indicating a zero state, and the zero state characterizes that the user equipment determines a transmitting beam for the user equipment to transmit the SRS over the SRS resource.

Optionally the indication information includes information indicating the user equipment to transmit the SRS over the SRS resource according to a transmitting beam indicated by the network device.

Optionally the indication information includes information indicating the user equipment to transmit the SRS over the SRS resource using a transmitting beam in a transmitting beam group, where the transmitting beam group corresponds to the transmitting beam indicated by the network device.

Optionally the indication information includes information indicating the user equipment to transmit the SRS over the SRS resource using the transmitting beam indicated by the network device.

Optionally the indication information further includes identification information of the transmitting beam indicated by the network device.

Optionally the indication information is encoded as one code state.

Optionally the network device pre-agrees with the user equipment on that the user equipment transmits the SRS over the SRS resource using a transmitting beam in a transmitting beam group, where the indication information includes identification information of the transmitting beam for transmitting the SRS over the SRS resource, and the transmitting beam group corresponds to a transmitting beam indicated by the network device.

Optionally the network device pre-agrees with the user equipment on that the user equipment transmits the SRS over the SRS resource using a transmitting beam indicated by the network device, where the indication information includes identification information of the transmitting beam for transmitting the SRS over the SRS resource.

Optionally the indication information further indicates that the SRS resources configured by the network device for the user equipment are grouped.

In a fourth aspect, an embodiment of the invention provides user equipment configured with an SRS resource by a network device, the user equipment including:
a receiving module configured to receive indication information transmitted by a network device, where the indication information indicates the user equipment to select a transmitting beam for transmitting an SRS over an SRS resource configured by the network device for the user equipment; and
a transmitting module configured to determine a transmitting beam for the user equipment to transmit the SRS over the SRS resource, according to the indication information transmitted by the network device, and to transmit the SRS over the SRS resource using the transmitting beam.

Optionally the indication information includes information indicating a zero state, and the zero state characterizes that the user equipment determines a transmitting beam for the user equipment to transmit an SRS over the SRS resource.

Optionally the indication information includes information indicating the user equipment to transmit the SRS over the SRS resource according to a transmitting beam indicated by the network device.

Optionally the indication information includes information indicating the user equipment to transmit the SRS over the SRS resource using a transmitting beam in a transmitting beam group, where the transmitting beam group corresponds to the transmitting beam indicated by the network device.

Optionally the indication information includes information indicating the user equipment to transmit the SRS over the SRS resource using the transmitting beam indicated by the network device.

Optionally the indication information further includes identification information of the transmitting beam indicated by the network device.

Optionally the indication information is encoded as one code state.

Optionally the user equipment pre-agrees with the network device on that the user equipment transmits the SRS over the SRS resource using a transmitting beam in a transmitting beam group, where the indication information includes identification information of the transmitting beam for transmitting an SRS over the SRS resource, and the transmitting beam group corresponds to a transmitting beam indicated by the network device.

Optionally the user equipment pre-agrees with the network device on that the user equipment transmits the SRS over the SRS resource using a transmitting beam indicated by the network device, where the indication information includes identification information of the transmitting beam for transmitting the SRS over the SRS resource.

Optionally the indication information further indicates that the SRS resources configured by the network device for the user equipment are grouped.

In a fifth aspect, an embodiment of the invention provides a computer device including a processor and a memory, where the processor is configured to execute computer program stored in the memory to:
configure user equipment with an SRS resource; and
transmit indication information to the user equipment to indicate the user equipment to select a transmitting beam for transmitting an SRS over the SRS resource.

Optionally the indication information includes information indicating a zero state, and the zero state characterizes that the user equipment determines the transmitting beam for the user equipment to transmit the SRS over the SRS resource.

Optionally the indication information includes information indicating the user equipment to transmit the SRS over the SRS resource according to a transmitting beam indicated by the network device.

Optionally the information indicating the user equipment to transmit the SRS over the SRS resource according to the transmitting beam indicated by the network device includes information indicating the user equipment to transmit the SRS over the SRS resource using a transmitting beam in a transmitting beam group, where the transmitting beam group corresponds to the transmitting beam indicated by the network device.

Optionally the information indicating the user equipment to transmit the SRS over the SRS resource according to the transmitting beam indicated by the network device includes information indicating the user equipment to transmit the SRS over the SRS resource using the transmitting beam indicated by the network device.

Optionally the indication information further includes identification information of the transmitting beam indicated by the network device.

Optionally the indication information is encoded as one code state.

Optionally the memory stores the following information pre-agreed by the network device with the user equipment on that: the user equipment transmits the SRS over the SRS resource using a transmitting beam in a transmitting beam group, where the indication information includes identification information of the transmitting beam for transmitting an SRS over the SRS resource, and the transmitting beam group corresponds to a transmitting beam indicated by the network device.

Optionally the memory stores the following information pre-agreed by the network device with the user equipment on that: the user equipment transmits the SRS over the SRS resource using a transmitting beam indicated by the network device, where the indication information includes identification information of the transmitting beam for transmitting the SRS over the SRS resource.

Optionally the processor is further configured to receive the SRSs transmitted by the user equipment over the SRS resources, over the SRS resources using a same receiving beam.

Optionally the processor is further configured to receive the SRSs transmitted by the user equipment over the SRS resources, over the SRS resources using different receiving beams.

Optionally the indication information further indicates that the SRS resources configured by the network device for the user equipment are grouped.

Optionally the processor is further configured to: receive the SRS resources in a same group using a same receiving beam, and receive the SRSs over the SRS resources in different groups using different receiving beams.

Optionally the identification information of the transmitting beam is SRS Resource Indicator (SRI) information of the SRS resource configured by the network device for the user equipment.

In a sixth aspect, an embodiment of the invention provides a computer device including a processor and a memory, where the processor is configured to execute computer program stored in the memory to:
receive indication information transmitted by a network device, where the indication information indicates the user equipment to select a transmitting beam for transmitting an SRS over an SRS resource configured by the network device for the user equipment; and
determine a transmitting beam for the user equipment to transmit the SRS over the SRS resource, according to the indication information transmitted by the network device, and transmitting the SRS over the SRS resource using the transmitting beam.

Optionally the indication information includes information indicating a zero state, and the zero state characterizes that the user equipment determines a transmitting beam for the user equipment to transmit the SRS over the SRS resource.

Optionally the processor is configured to transmit SRSs over the different SRS resources using different transmitting beams.

Optionally the indication information includes information indicating the user equipment to transmit the SRS over the SRS resource according to a transmitting beam indicated by the network device.

Optionally the information indicating the user equipment to transmit the SRS over the SRS resource according to the transmitting beam indicated by the network device includes information indicating the user equipment to transmit the SRS over the SRS resource using a transmitting beam in a transmitting beam group, where the transmitting beam group corresponds to the transmitting beam indicated by the network device.

Optionally the information indicating the user equipment to transmit the SRS over the SRS resource according to the transmitting beam indicated by the network device includes information indicating the user equipment to transmit the SRS over the SRS resource using the transmitting beam indicated by the network device.

Optionally the indication information further includes identification information of the transmitting beam indicated by the network device.

Optionally the indication information is encoded as one code state.

Optionally the memory stores the following information pre-agreed by the user equipment with the network device on that: the user equipment transmits the SRS over the SRS resource using a transmitting beam in a transmitting beam group, where the indication information includes identification information of the transmitting beam for transmitting an SRS over the SRS resource, and the transmitting beam group corresponds to a transmitting beam indicated by the network device.

Optionally the memory stores the following information pre-agreed by the user equipment with the network device on that: the user equipment transmits the SRS over the SRS resource using a transmitting beam indicated by the network device, where the indication information includes identification information of the transmitting beam for transmitting the SRS over the SRS resource.

Optionally the processor is configured to: transmit an SRS over the SRS resource using a transmitting beam in a transmitting beam group, where the transmitting beam group corresponds to the transmitting beam indicated by the network device.

Optionally the indication information further indicates that the SRS resources configured by the network device for the user equipment are grouped.

Optionally the processor is configured to transmit SRSs over different SRS resources in a same SRS resource group using different receiving beams.

In a seventh aspect, an embodiment of the invention provides a computer readable storage medium storing computer program configured, upon being executed by a processor, to perform the method according to any one of the embodiments in the first aspect or the second aspect.

One or more of the technical solutions according to the embodiments of the invention have at least the following technical effects or advantages: the base station transmits indication information of transmitting beams to be used over an SRS resource to the user equipment so that the network can control transmitting beams of the user equipment, and receiving beams of the base station to be swept.

### Brief Description of the Drawings

Fig. 1 is a first flow chart of a beam management method according to an embodiment of the invention;
Fig. 2 is a second flow chart of a beam management method according to an embodiment of the invention;
Fig. 3 is a schematic structural diagram of a network device according to an embodiment of the invention; and
Fig. 4 is a schematic structural diagram of user equipment according to an embodiment of the invention.

### Detailed Description of the Embodiments

In order to sweep transmitting beams of user equipment and receiving beams of a base station more efficiently, a general idea of the technical solutions according to the embodiments of the invention is as follows: in a beam management method, a network device, and user equipment, the network device configures the user equipment with an SRS resource, and transmits indication information to the user equipment to indicate the user equipment to select a transmitting beam for transmitting an SRS over the SRS resource.

In order to better understand the technical solutions above, the technical solutions above will be described below in details with reference to the drawings, and in connection with particular embodiments thereof.

In the embodiments of the invention, there are a transmitting device (i.e., the network device) and a receiving device (i.e., the user equipment), and downlink transmission and uplink reception can be made between the transmitting device, and the receiving device accessing the transmitting device.

Particularly the transmitting device can be a base station or another type of transmitting point device, and the receiving device can be user equipment (or a terminal). Of course, they will not be limited thereto, but for example, the transmitting device can alternatively be a terminal which can configure another terminal. A transmitting device can alternatively include a plurality of network nodes. A network node can include only a radio frequency component (e.g., a Remote Radio Unit (RRU)) or both a baseband component and a radio frequency component (e.g., an active antenna). The network node may include only a baseband component (e.g., a Base Band Unit (BBU)), or may not include any digital and/or radio frequency function at air-interface layer, but may be only responsible for higher-layer signal processing, and baseband processing at the air-interface layer can be put into the active antennas. Alternatively there are a number of other possible network implementations.

The user equipment (UE) can also be referred to as a terminal, a Mobile Station (MS), a mobile terminal, etc., and the user equipment can communicate with one or more core networks over a Radio Access Network (RAN). For example, the terminal can be a mobile phone (or a "cellular" phone), a computer including a mobile terminal, etc., or for example, the user equipment can be a portable, a pocket, a handheld, a built-in-computer or vehicular mobile device, etc., which exchange voice and/or data over the radio access network. The user equipment in the embodiments of the invention can alternatively be a Device to Device (D2D) terminal or a Machine to Machine (M2M) terminal. The network device and the user equipment will not be limited thereto in the embodiments of the invention.

In the embodiments of the invention, the network device can specify one or more transmitting beams, and the number of beams will not be limited to any particular number in the embodiments of the invention. For example, the network device indicate the transmitting beam or beams specified by the network device, in an SRI, where an SRS resource corresponding to the SR is configured with a plurality of antenna ports, and the user equipment previously transmitted an SRS over the SRS resource using different transmitting beams on the different antenna ports, so the transmitting beams indicated in the SRI correspond to the transmitting beams for the user equipment to previously transmit an SRS over the SRS resource on the different antenna ports. Alike in the embodiments of the invention, a transmitting beam group may correspond to the transmitting beam or beams specified by the network device, although the number of transmitting beam beams specified by the network device corresponds to ttransmitting beam group is not limited in the embodiment of the present invention. For example, the network device indicates the transmitting beam or beams specified by the network device, in an SRI, where an SRS resource corresponding to the SRI is configured with a plurality of antenna ports, and the user equipment previously transmitted an SRS over the SRS resource using different transmitting beams on the different antenna ports, so a transmitting beam group corresponding to the transmitting beams indicated in the SRI correspond to a transmitting beam group corresponding to the transmitting beams for the user equipment to previously transmit an SRS over the SRS resource on the different antenna ports.

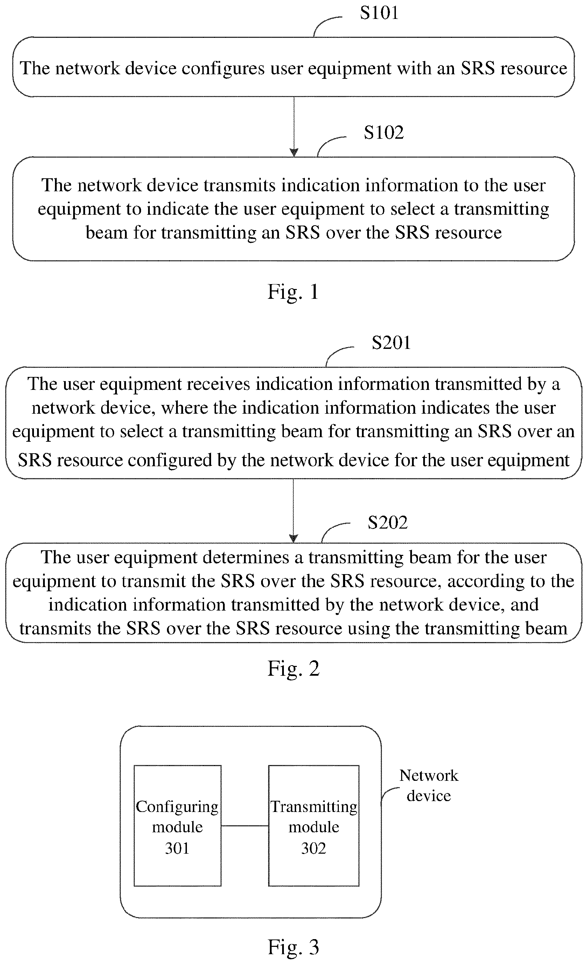

As illustrated in Fig. 1, a beam management method according to a first embodiment of the invention is applicable to a network device, and includes the following steps.

In step S101, the network device configures user equipment with an SRS resource.

In step S102, the network device transmits indication information to the user equipment to indicate the user equipment to select a transmitting beam for transmitting an SRS over the SRS resource.

As the indication information in the step S102 varies, the beam management method according to the embodiments can be performed particularly in the following implementations.

In a first implementation, the indication information includes information indicating a zero state, where the zero state characterizes that the user equipment determines the transmitting beam for the user equipment to transmit the SRS over the SRS resource. For example, the indication information includes the information indicating that the transmitting beam for the user equipment to transmit the SRS is not limited by the network device. For example, a particular state of the indication information can be the state 000 in Table 1 to Table 6 (the state of the indication information is represented in a binary system), this is only an example, but the embodiments of the invention will not be limited thereto, and the particular state of the indication information can alternatively be represented as another value, e.g., 111, 00, etc.

Particularly after the network device transmits the indication information to the user equipment, the user equipment can transmit an SRS over one or more SRS resources currently configured by the network device using any transmitting beam. For example, the network device configures the user equipment with a plurality of SRS resources, and the user equipment transmits an SRS over the different SRS resources using different transmitting beams, that is, the transmitting beams are swept. If the user equipment transmits an SRS over the different SRS resources using different transmitting beams, then a receiver in the network device may receive an SRS using the same receive (Rx) beam to thereby determine an optimum transmitting beam of the user equipment corresponding to the receiving beam of the network device so that the transmitting beams of the user equipment are swept.

In a second implementation, the indication information includes information indicating the user equipment to transmit the SRS over the SRS resource using a transmitting beam in a transmitting beam group and identification information of the transmitting beam indicated by the network device, where the transmitting beam group corresponds to the transmitting beam indicated by the network device. The indication information can be encoded as one code state. For example, one code state in the indication information characterizes that the indication information includes information indicating the user equipment to transmit the SRS over the SRS resource using a transmitting beam in a transmitting beam group and the identification information of the transmitting beam indicated by the network device, where the transmitting beam group corresponds to the transmitting beam indicated by the network device.

For example, the code state 1100 of the indication information in Table 3 characterizes a transmitting beam specified by a base station in the indication information as a transmitting beam corresponding to an SRS resource with SRI=5, and that the user equipment should transmit the SRS over the configured SRS resource using a transmitting beam in a transmitting beam group, where the transmitting beam group corresponds to the transmitting beam specified by a base station in the indication information.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 0 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam group corresponding to a transmitting beam indicated by a base station, and the code state 010 of the first indication information and the code state 1 of the second indication information jointly characterize the transmitting beam specified by the base station in the indication information as a transmitting beam corresponding to an SRS resource with SRI=1, and that the user equipment should transmit the SRS over the configured SRS resource using a transmitting beam in the transmitting beam group, where the transmitting beam group corresponds to the transmitting beam specified by the base station.

Particularly after the network device transmits the indication information to the user equipment, the user equipment transmits an SRS over respective SRS resources using the transmitting beam group corresponding to the transmitting beam indicated by the network device. A mapping relationship between the transmitting beam indicated by the network device, and the transmitting beam group for the user equipment can be determined by the user equipment, or can be pre-agreed by the network device with the user equipment, or can be signaled by the network device to the user equipment. In the case that there are a number of mapping relationships between the transmitting beam indicated by the network device, and the transmitting beam group for the user equipment, the network device can signal one of the mapping relationships to the user equipment, or indicate one of the mapping relationships implicitly in the indication information. For example, the states 1000 to 1010 of the indication information in Table 3 represent a first mapping relationship, and the states 1011 to 1111 represent a second mapping relationship (the mapping relationships are not particularly depicted in the table).

A mapping relationship refers to the transmitting beam indicated by the network device corresponds to a group of transmitting beam with the same width as or the similar width to the transmitting beam indicated by the network device. For example, the network device currently configures the user equipment with N SRS resources, and the user equipment transmits an SRS using N transmitting beams with the same width as the transmitting beam indicated by the network device upon reception of the indication information, where these N transmitting beams may or may not include the transmitting beam currently indicated by the network device. For example, the transmitting beam indicated by the network device is a transmitting beam numbered K, and the user equipment is currently configured with four SRS resources by the network device, so the user equipment transmits an SRS over the four SRS resources respectively using the (K-1)-th, K-th, (K+1)-th, and (K+2)-th transmitting beams respectively. This mapping relationship can apply to beam sweeping at respective levels. For example, in a scenario where there are M transmitting beams in total of the user equipment, the base station configures the user equipment with N SRS resources for beam sweeping at the first level, so the user equipment groups these M transmitting beams into N groups, where the last transmitting beam group includes *M-*(*N*-1)^{∗}┌*M*/*N*┐ transmitting beams, and each other transmitting beam group than the last transmitting beam group includes ┌*M*/*N*┐ transmitting beams (where ┌•┐ represents rounding up). The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with ┌*M*/*N*┐ SRS resources, so the user equipment transmits an SRS over these ┌*M*/*N*┐ SRS resources using a transmitting beam in a transmitting beam group including the transmitting beam corresponding to the n-th SRS resource. In this way, the number of SRS resources for beam sweeping at the respective levels can be reduced to thereby save an overhead, as compared with a large number M of SRS resources configured for the user equipment to perform beam sweeping.

Another mapping relationship refers to that the transmitting beam indicated by the network device corresponds to a narrower transmitting beam group, and the user equipment transmits SRSs over different SRS resources configured for the user equipment using transmitting beams in the transmitting beam group. In this implementation, the user equipment can perform finer local beam sweeping in the transmitting beam group. This mapping relationship can also be regarded as beam sweeping at respective levels. Beam sweeping at the first level can be performed on wider transmitting beams. For example, the base station at the first level configures the user equipment with N SRS resources. The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with K SRS resources, so the user equipment can transmit SRSs over the K SRS resources using a transmitting beam in a directional (narrower) transmitting beam group including K transmitting beams, where the directional (narrower) transmitting beam group corresponds to a transmitting beam corresponding to the n-th SRS resource. If the network device receives these SRSs using the same receiving beam, then transmitting-beam sweeping can be performed in this implementation at a higher precision than beam sweeping at the first level, that is, the network device can receive the SRSs over the SRS resources using the same receiving beam.

In a third implementation, the network device pre-agrees with the user equipment on that the user equipment transmits an SRS over the SRS resource using a transmitting beam in a transmitting beam group , where the indication information includes identification information (e.g., an SRI, particularly as depicted in Table 1) identifying the transmitting beam for transmitting an SRS over the SRS resource, and the transmitting beam group corresponds to a transmitting beam indicated by the network device.

After the network device transmits the indication information to the user equipment, the user equipment receives the indication information, obtains the identification information of the transmitting beam indicated by the network device, and selects transmitting beams for transmitting an SRS over respective SRS resources according to the identification information under a pre-agreed rule. The pre-agreed rule refers to that the user equipment transmits an SRS over the SRS resource using a transmitting beam in a transmitting beam group, where the transmitting beam group corresponds to the transmitting beam indicated by the network device.

The user equipment transmits an SRS over the SRS resource using a transmitting beam in the transmitting beam group, where the transmitting beam group corresponds to the transmitting beam indicated by the network device. A receiver in the network device can receive an SRS using the same receive (Rx) beam to thereby determine an optimum transmitting beam of the user equipment corresponding to the receiving beam of the network device so that the transmitting beams of the user equipment are swept. The same receiving beam can be an optimum receiving beam previously selected by the network device, or can be a receiving beam determined otherwise by the network device.

A mapping relationship between the transmitting beam indicated by the network device for the user equipment, and the transmitting beam group corresponding to the transmitting beam indicated by the network device can be the same as the mapping relationship in the second implementation, so a repeated description thereof will be omitted here. Alike the mapping relationship between the transmitting beam indicated by the network device and the corresponding transmitting beam group can be determined by the user equipment, or can be pre-agreed on between the network device and the user equipment, or can be signaled by the network device to the user equipment.

In a fourth implementation, the indication information includes information indicating the user equipment to transmit an SRS over the SRS resource using a transmitting beam in a transmitting beam group, where the transmitting beam group corresponds to the transmitting beam indicated by the network device. Particularly the state 10 of the indication information in Table 4 characterizes that the user equipment transmits an SRS using a transmitting beam group corresponding to a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

After a transmitting module in the network device transmits the indication information to the user equipment, the user equipment receives the indication information, obtains the identification information of the transmitting beam indicated by the base station, and transmits an SRS over the SRS resource using a transmitting beam in the transmitting beam group, where the transmitting beam group corresponds to the transmitting beam indicated by the network device.

A mapping relationship between the transmitting beam indicated by the network device for the user equipment and the transmitting beam group corresponding to the transmitting beam can be the same as the mapping relationship in the second implementation, so a repeated description thereof will be omitted here.

In the first implementation to the fourth implementation above, the network device receives the SRSs transmitted by the user equipment over the SRS resources respectively, over the SRS resources using the same receiving beam.

In the second implementation to the fourth implementation above, the mapping relationship between the transmitting beam indicated by the network device, and the corresponding transmitting beam group can be determined by the user equipment, or can be pre-agreed on between the network device and the user equipment, or can be signaled by the network device to the user equipment.

In a fifth implementation, the indication information includes information indicating the user equipment to transmit an SRS over the SRS resource using a transmitting beam indicated by the network device, and identification information of the transmitting beam indicated by the network device. The indication information can be encoded as one code state. For example, one code state in the indication information characterizes that the indication information includes information indicating the user equipment to transmit an SRS over the SRS resource using a transmitting beam indicated by the network device, and identification information of the transmitting beam indicated by the network device. For example, the code state 1100 of the indication information in Table 3 characterizes a transmitting beam specified by a base station in the indication information as a transmitting beam corresponding to an SRS resource with SRI=5, and that the user equipment should transmit an SRS over the configured SRS resource using the transmitting beam.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 1 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam indicated by a base station, and the code state 010 of the first indication information, and the code state 1 of the second indication information jointly characterize the transmitting beam specified by the base station in the indication information as a transmitting beam corresponding to an SRS resource with SRI=1, and that the user equipment should transmit an SRS over the configured SRS resource using the transmitting beam.

Particularly the network device transmits the indication information to the user equipment, and the user equipment receives the indication information, and transmits an SRS over one or more SRS resources currently configured by the network device, using the transmitting beam indicated by the network device.

For example, the indication information further includes identification information of the transmitting beam indicated by the network device, where the identification information is SRI information indicating a state in the indication information, for example, and the SRI indicates the sequence number of an SRS resource for the user equipment to previously transmit an SRS, e.g., the states 001 to 110 in Table 2. After the user equipment determines the SRI information, the user equipment transmits an SRS over all the SRS resources currently configured by the network device using the transmitting beam for the SRS resource corresponding to the SRI. Moreover a plurality of code states can represent the same value of the SRI, and for example, the states 001 and 010 in the indication information can represent SRI=0.

The indication information indicates how the user equipment selects a transmitting beam for transmitting an SRS, and the identification information of the transmitting beam indicated by the network device can be transmitted separately. For example, the network device additionally transmits the SRI information to the user equipment to indicate the transmitting beam for the user equipment.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a sixth implementation, the network device pre-agrees with the user equipment on that the user equipment transmits an SRS over the SRS resource using a transmitting beam indicated by the network device, where the indication information includes identification information (e.g., an SRI, particularly as depicted in Table 1) of the transmitting beam for transmitting the SRS over the SRS resource.

After the network device transmits the indication information to the user equipment, the user equipment receives the indication information, obtains the identification information of the transmitting beam indicated by the network device, and selects transmitting beams for transmitting an SRS over respective SRS resources, according to the identification information under a pre-agreed rule. The pre-agreed rule refers to that the user equipment transmits an SRS over the SRS resource using a transmitting beam indicated by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a seventh implementation, the indication information includes information indicating the user equipment to transmit the SRS over the SRS resource using a transmitting beam indicated by the network device. Particularly the state 10 of the indication information in Table 4, or the state 01 of the indication information in Table 5 characterizes that the user equipment transmits an SRS over a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

The user equipment selects a transmitting beam for transmitting an SRS, according to the subsequently obtained SRI information upon reception of the indication information transmitted by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In an eighth implementation, the indication information includes information indicating that the SRS resources configured by the network device groups for the user equipment are grouped, and the network device does not limit any transmitting beam for the user equipment to transmit an SRS, where the information indicates that the network device does not limit any transmitting beam for the user equipment to transmit an SRS, so that the indication information characterizes that the user equipment determines a transmitting beam for the user equipment to transmit an SRS over the SRS resource. The user equipment can transmit an SRS over the SRS resource using any transmitting beam. Information about grouping of the SRS resources (i.e., how the SRS resources are grouped) can be determined by the user equipment, or can be pre-agreed on between the network device and the user equipment, or can be signaled by the network device to the user equipment.

In the case that the information about grouping of the SRS resources is signaled by the network device to the user equipment, the network device can carry the information about grouping of the SRS resources in the indication information, or can transmit the information about grouping of the SRS resources to the user equipment in another transmission signal than a transmission signal for transmitting the indication information. The user equipment can transmit an SRS over one or more of the SRS resources currently configured by the network device using any transmitting beam upon reception of the states of the indication information.

For example, the network device pre-agrees with the user equipment on that the SRS resources are grouped according to the number of transmitting beams of the user equipment to be swept and previously reported by the user equipment to the network device, and the number of SRS resources currently configured by the network device. If the network device currently configures M SRS resources, and the number of transmitting beams of the user equipment to be swept and previously reported by the user equipment to the network device is N, then the 1^{st}, 2^{nd}, ..., and N-th SRS resources will be grouped together, the (N+1)-th, (N+2)-th, ..., and 2N-th SRS resources will be grouped together, and so on.

When the indication information includes the information indicating that the SRS resources configured by the network device for the user equipment are grouped, the user equipment can transmit the SRSs over different SRS resources in the same SRS resource group using different transmitting beams so that the transmitting beams are swept, regardless of how the user equipment obtains the information about grouping of the SRS resources (for example, the information about grouping of the SRS resources can be determined by the user equipment, or can be pre-agreed on between the network device and the user equipment, or can be signaled by the network device to the user equipment, or can be obtained by the user equipment as can occur to those skilled in the art). The network device receives the SRSs over the resources included in the same SRS resource group using the same receiving beam, and receives the SRSs over the resources included in different SRS resource groups using different receiving beams.

In this implementation, the receiving beams of the network device, and the transmitting beams of the user equipment can be swept. In another implementation, the network device pre-agrees with the user equipment on a rule of grouping the SRS resources, and the network device signals the number of groups into which the SRS resources configured by the network device for the user equipment to the user equipment. For example, the network device notifies the user equipment that the SRS resources configured for the user equipment are grouped into K groups, so the user equipment determines that the 1^{st}, the 1^{st}, 2^{nd}, ..., and M-th SRS resources will be grouped together (the first one of the K groups in total), the (N+1)-th, (N+2)-th, ..., and 2M-th SRS resources will be grouped together (the second one of the K groups in total), and so on, according to the pre-agreed rule of grouping the SRS resources. Alternatively the state of the indication information includes information about grouping of the SRS resources configured for the user equipment. For example, the states 001 to 010 of the indication information represent only one SRS resource group, and 011 to 100 represent two SRS resource groups (not illustrated in the table).

In the respective particular implementations above of the beam management method, the identification information of the transmitting beam can particularly be the SRS Resource Indicator (SRI) information of the SRS resources configured by the network device for the user equipment.

As illustrated in Fig. 2, a beam management method according to a second embodiment of the invention is applicable to user equipment, and includes the following steps.

In the step S201, the user equipment receives indication information transmitted by a network device, where the indication information indicates the user equipment to select a transmitting beam for transmitting an SRS over an SRS resource configured by the network device for the user equipment.

In the step S202, the user equipment determines a transmitting beam for the user equipment to transmit the SRS over the SRS resource, according to the indication information transmitted by the network device, and transmits the SRS over the SRS resource using the transmitting beam.

As the indication information in the step S202 varies, the beam management method according to this embodiment can be performed particularly in the following implementations.

In a first implementation, the indication information includes information indicating a zero state, where the zero state characterizes that the user equipment determines a transmitting beam for the user equipment to transmit the SRS over the SRS resource. For example, the indication information includes the information indicating that a transmitting beam for the user equipment to transmit the SRS is not limited by the network device. For example, a particular state of the indication information can be the state 000 in Table 1 to Table 6 (the state of the indication information is represented in a binary system), this is only an example, but the embodiments of the invention will not be limited thereto, and the particular state of the indication information can alternatively be represented as another value, e.g., 111, 00, etc.

Particularly the user equipment can transmit an SRS over one or more SRS resources currently configured by the network device using any transmitting beam upon reception of the indication information transmitted by the network device.

For example, the network device configures the user equipment with a plurality of SRS resources, and the user equipment transmits an SRS over the different SRS resources using different transmitting beams, that is, the transmitting beams are swept. If the user equipment transmits an SRS over the different SRS resources using different transmitting beams, then a receiver in the network device may receive an SRS using the same receive (Rx) beam to thereby determine an optimum transmitting beam of the user equipment corresponding to the receiving beam of the network device so that the transmitting beams of the user equipment are swept.

In a second implementation, the indication information includes information indicating the user equipment to transmit the SRS over the SRS resource using a transmitting beam in a transmitting beam group and identification information of the transmitting beam indicated by the network device, where the transmitting beam group corresponds to the transmitting beam indicated by the network device. The indication information can be encoded as one code state. For example, one code state in the indication information characterizes that the indication information includes information indicating the user equipment to transmit the SRS over the SRS resource using a transmitting beam in a transmitting beam group and the identification information of the transmitting beam indicated by the network device, where the transmitting beam group corresponds to the transmitting beam indicated by the network device.

For example, the code state 1100 of the indication information in Table 3 characterizes a transmitting beam specified by a base station in the indication information as a transmitting beam corresponding to an SRS resource with SRI=5, and that the user equipment should transmit the SRS over the configured SRS resource using a transmitting beam in a transmitting beam group, where the transmitting beam group corresponds to the transmitting beam specified by a base station in the indication information.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 0 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam group corresponding to a transmitting beam indicated by a base station, and the code state 010 of the first indication information and the code state 1 of the second indication information jointly characterize the transmitting beam specified by the base station in the indication information as a transmitting beam corresponding to an SRS resource with SRI=1, and that the user equipment should transmit the SRS over the configured SRS resource using a transmitting beam in the transmitting beam group corresponding to the transmitting beam. Particularly the user equipment transmits an SRS over respective SRS resources using the transmitting beam group corresponding to the transmitting beam indicated by the network device upon reception of the indication information transmitted by the network device. For example, the user equipment transmits an SRS over the SRS resources using transmitting beams in the transmitting beam group, where the transmitting beam group corresponds to the transmitting beam indicated by the network device.

A mapping relationship between the transmitting beam indicated by the network device, and the transmitting beam group for the user equipment can be determined by the user equipment, or can be pre-agreed on by the user equipment with the network device, or can be received by the user equipment from the network device via signaling. In the case that there are a number of mapping relationships between the transmitting beam indicated by the network device, and the transmitting beam group for the user equipment, the network device can signal one of the mapping relationships to the user equipment, or indicate one of the mapping relationships implicitly in the indication information. For example, the states 1000 to 1010 of the indication information in Table 3 represent a first mapping relationship, and the states 1011 to 1111 represent a second mapping relationship (the mapping relationships are not particularly depicted in the table).

A mapping relationship refers to the transmitting beam indicated by the network device corresponds to a group of transmitting beam with the same width as or the similar width to the transmitting beam indicated by the network device. For example, the network device currently configures the user equipment with N SRS resources, and the user equipment transmits an SRS using N transmitting beams with the same width as the transmitting beam indicated by the network device upon reception of the indication information, where these N transmitting beams may or may not include the transmitting beam currently indicated by the network device. For example, the transmitting beam indicated by the network device is a transmitting beam numbered K, and the user equipment is currently configured with four SRS resources by the network device, so the user equipment transmits an SRS over the four SRS resources respectively using the (K-1)-th, K-th, (K+1)-th, and (K+2)-th transmitting beams respectively. This mapping relationship can apply to beam sweeping at respective levels. For example, in a scenario where there are M transmitting beams in total of the user equipment, the base station configures the user equipment with N SRS resources for beam sweeping at the first level, so the user equipment groups these M transmitting beams into N groups, where the last transmitting beam group includes *M-*(*N*-1)^{∗}┌*M*/*N*┐ transmitting beams, and each other transmitting beam group than the last transmitting beam group includes ┌*M*/*N*┐ transmitting beams (where ┌•┐ represents rounding up). The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with ┌*M*/*N*┐ SRS resources, so the user equipment transmits an SRS over these ┌*M*/*N*┐ SRS resources using a transmitting beam in a transmitting beam group including the transmitting beam corresponding to the n-th SRS resource. In this way, the number of SRS resources for beam sweeping at the respective levels can be reduced to thereby save an overhead, as compared with a large number M of SRS resources configured for the user equipment to perform beam sweeping.

Another mapping relationship refers to that the transmitting beam indicated by the network device corresponds to a narrower transmitting beam group, and the user equipment transmits SRSs over different SRS resources configured for the user equipment using transmitting beams in the transmitting beam group. In this implementation, the user equipment can perform finer local beam sweeping in the transmitting beam group. This mapping relationship can also be regarded as beam sweeping at respective levels. Beam sweeping at the first level can be performed on wider transmitting beams. For example, the base station at the first level configures the user equipment with N SRS resources. The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with K SRS resources, so the user equipment can transmit SRSs over the K SRS resources using a transmitting beam in a directional (narrower) transmitting beam group including K transmitting beams, where the directional (narrower) transmitting beam group corresponds to a transmitting beam corresponding to the n-th SRS resource. If the network device receives these SRSs using the same receiving beam, then transmitting-beam sweeping can be performed in this implementation at a higher precision than beam sweeping at the first level, that is, the network device can receive the SRSs over the SRS resources using the same receiving beam.

In a third implementation, the user equipment pre-agrees with the network device on that the user equipment transmits an SRS over the SRS resource using a transmitting beam in a transmitting beam group, , where the indication information includes identification information (e.g., an SRI, particularly as depicted in Table 1) identifying the transmitting beam for transmitting an SRS over the SRS resource, and the transmitting beam group corresponds to a transmitting beam indicated by the network device.

Upon reception of the indication information transmitted by the network device, the user equipment obtains the identification information of the transmitting beam indicated by the network device, and selects transmitting beams for transmitting an SRS over respective SRS resources according to the identification information under a rule which is agreed on in advance. The pre-agreed rule refers to that the user equipment transmits an SRS over the SRS resource using a transmitting beam in a transmitting beam group, where the transmitting beam group corresponds to the transmitting beam indicated by the network device.

The user equipment transmits an SRS over the SRS resource using a transmitting beam in the transmitting beam group, where the transmitting beam group corresponds to the transmitting beam indicated by the network device. A receiver in the network device can receive an SRS using the same receive (Rx) beam to thereby determine an optimum transmitting beam of the user equipment corresponding to the receiving beam of the network device so that the transmitting beams of the user equipment are swept. The same receiving beam can be an optimum receiving beam previously selected by the network device, or can be a receiving beam determined otherwise by the network device. A mapping relationship between the transmitting beam indicated by the network device for the user equipment, and the transmitting beam group corresponding to the transmitting beam indicated by the network device can be the same as the mapping relationship in the second implementation according to this embodiment, so a repeated description thereof will be omitted here. Alike the mapping relationship between the transmitting beam indicated by the network device, and the corresponding transmitting beam group can be determined by the user equipment, or can be pre-agreed on between the network device and the user equipment, or can be signaled by the network device to the user equipment.

In a fourth implementation, the indication information includes information indicating the user equipment to transmit an SRS over the SRS resource using a transmitting beam in a transmitting beam group, where the transmitting beam group corresponds to a transmitting beam indicated by the network device. Particularly the state 10 of the indication information in Table 4 characterizes that the user equipment transmits an SRS using a transmitting beam group corresponding to a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

Upon reception of the indication information transmitted by the network device, the user equipment further receives the SRI information transmitted by the base station, and transmits an SRS over the SRS resource using a transmitting beam in the transmitting beam group, where the transmitting beam group corresponds to the transmitting beam indicated by the network device.

A mapping relationship between the transmitting beam indicated by the network device for the user equipment, and the transmitting beam group corresponding to the transmitting beam can be the same as the mapping relationship in the second implementation according to this embodiment, so a repeated description thereof will be omitted here. Alike the mapping relationship between the transmitting beam indicated by the network device and the corresponding transmitting beam group can be determined by the user equipment, or can be pre-agreed on between the network device and the user equipment, or can be signaled by the network device to the user equipment.

In the second implementation to the fourth implementation, the user equipment transmits an SRS over the SRS resource using a transmitting beam in the transmitting beam group, where the transmitting beam group corresponds to the transmitting beam indicated by the network device.

In the first implementation to the fourth implementation, the network device receives the SRSs transmitted by the user equipment over the SRS resources, over the SRS resources using the same receiving beam.

In the second implementation to the fourth implementation, the mapping relationship between the transmitting beam indicated by the network device, and the corresponding transmitting beam group can be determined by the user equipment, or can be pre-agreed on between the network device and the user equipment, or can be signaled by the network device to the user equipment.

In a fifth implementation, the indication information includes information indicating the user equipment to transmit an SRS over the SRS resource using a transmitting beam indicated by the network device, and identification information of the transmitting beam indicated by the network device. The indication information can be encoded as one code state. For example, one code state in the indication information characterizes that the indication information includes information indicating the user equipment to transmit an SRS over the SRS resource using a transmitting beam indicated by the network device, and identification information of the transmitting beam indicated by the network device. For example, the code state 1100 of the indication information in Table 3 characterizes a transmitting beam specified by a base station in the indication information as a transmitting beam corresponding to an SRS resource with SRI=5, and that the user equipment should transmit an SRS over the configured SRS resource using the transmitting beam.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 1 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam indicated by a base station, and the code state 010 of the first indication information, and the code state 1 of the second indication information jointly characterize the transmitting beam specified by the base station in the indication information as a transmitting beam corresponding to an SRS resource with SRI=1, and that the user equipment should transmit an SRS over the configured SRS resource using the transmitting beam.

Particularly the user equipment receives the indication information transmitted by the network device, and transmits an SRS over one or more SRS resources currently configured by the network device, using the transmitting beam indicated by the network device.

For example, the indication information further includes identification information of the transmitting beam indicated by the network device, where the identification information is SRI information indicating a state in the indication information, for example, and the SRI indicates the sequence number of an SRS resource for the user equipment to previously transmit an SRS, e.g., the states 001 to 110 in Table 2. After the user equipment determines the SRI information, the user equipment transmits an SRS over all the SRS resources currently configured by the network device using the transmitting beam for the SRS resource corresponding to the SRI. Moreover a plurality of code states can represent the same value of the SRI, and for example, the states 001 and 010 in the indication information can represent SRI=0.

The indication information indicates how the user equipment selects a transmitting beam for transmitting an SRS, and the identification information of the transmitting beam indicated by the network device can be transmitted separately. For example, the network device additionally transmits the SRI information to the user equipment to indicate the transmitting beam for the user equipment.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a sixth implementation, the user equipment pre-agrees with the network device on that the user equipment transmits an SRS over the SRS resource using a transmitting beam indicated by the network device, where the indication information includes identification information (e.g., an SRI, particularly as depicted in Table 1) of the transmitting beam for transmitting the SRS over the SRS resource.

Upon reception of the indication information transmitted by the network device, the user equipment obtains the identification information of the transmitting beam indicated by the network device, and selects transmitting beams for transmitting an SRS over respective SRS resources, according to the identification information under a pre-agreed rule. The pre-agreed rule refers to that the user equipment transmits an SRS over the SRS resource using a transmitting beam indicated by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a seventh implementation, the indication information includes information indicating the user equipment to transmit the SRS over the SRS resource using a transmitting beam indicated by the network device. Particularly the state 10 of the indication information in Table 4, or the state 01 of the indication information in Table 5 characterizes that the user equipment transmits an SRS over a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

The user equipment selects a transmitting beam for transmitting an SRS, according to the subsequently obtained SRI information upon reception of the indication information transmitted by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In an eighth implementation, the indication information includes information indicating that the SRS resources configured by the network device groups for the user equipment are grouped, and the network device does not limit any transmitting beam for the user equipment to transmit an SRS, where the information indicates that the network device does not limit any transmitting beam for the user equipment to transmit an SRS, so that the indication information characterizes that the user equipment determines a transmitting beam for the user equipment to transmit an SRS over the SRS resource. Information about grouping of the SRS resources (i.e., how the SRS resources are grouped) can be determined by the user equipment, or can be pre-agreed on between the network device and the user equipment, or can be signaled by the network device to the user equipment.

In the case that the information about grouping of the SRS resources is signaled by the network device to the user equipment, the network device can carry the information about grouping of the SRS resources in the indication information, or can transmit the information about grouping of the SRS resources to the user equipment in another transmission signal than a transmission signal for transmitting the indication information. The user equipment can transmit an SRS over one or more of the SRS resources currently configured by the network device using any transmitting beam upon reception of the states of the indication information.

For example, the user equipment pre-agrees with the network device on that the SRS resources are grouped according to the number of transmitting beams of the user equipment to be swept and previously reported by the user equipment to the network device, and the number of SRS resources currently configured by the network device. If the network device currently configures M SRS resources, and the number of transmitting beams of the user equipment to be swept and previously reported by the user equipment to the network device is N, then the 1^{st}, 2^{nd}, ..., and N-th SRS resources will be grouped together, the (N+1)-th, (N+2)-th, ..., and 2N-th SRS resources will be grouped together, and so on.

When the indication information includes the information indicating that the SRS resources configured by the network device for the user equipment are grouped, the user equipment can transmit the SRSs over different SRS resources in the same SRS resource group using different transmitting beams so that the transmitting beams are swept, regardless of how the user equipment obtains the information about grouping of the SRS resources (for example, the information about grouping of the SRS resources can be determined by the user equipment, or can be pre-agreed on between the network device and the user equipment, or can be signaled by the network device to the user equipment, or can be obtained by the user equipment as can occur to those skilled in the art). The network device receives the SRSs over the resources included in the same SRS resource group using the same receiving beam, and receives the SRSs over the resources included in different SRS resource groups using different receiving beams.

In this implementation, the receiving beams of the network device, and the transmitting beams of the user equipment can be swept. In another implementation, the user equipment pre-agrees with the network device on a rule of grouping the SRS resources, and the network device signals the number of groups into which the SRS resources configured by the network device for the user equipment to the user equipment. For example, the network device notifies the user equipment that the SRS resources configured for the user equipment are grouped into K groups, so the user equipment determines that the 1^{st}, the 1^{st}, 2^{nd}, ..., and M-th SRS resources will be grouped together (the first one of the K groups in total), the (N+1)-th, (N+2)-th, ..., and 2M-th SRS resources will be grouped together (the second one of the K groups in total), and so on, according to the pre-agreed rule of grouping the SRS resources. Alternatively the state of the indication information includes information about grouping of the SRS resources configured for the user equipment. For example, the states 001 to 010 of the indication information represent only one SRS resource group, and 011 to 100 represent two SRS resource groups (not illustrated in the table).

In the respective particular implementations above of the beam management method, the identification information of the transmitting beam can particularly be the SRS Resource Indicator (SRI) information of the SRS resources configured by the network device for the user equipment.

As illustrated in Fig. 3, a network device according to a third embodiment of the invention includes: a configuring module 301 is configured to configure user equipment with an SRS resource; and a transmitting module 302 is configured to transmit indication information to the user equipment to indicate the user equipment to select a transmitting beam for transmitting an SRS over the SRS resource.

As the indication information transmitted by the transmitting module varies, the network device according to this embodiment can operate particularly in the following implementations.

In a first implementation, the indication information includes information indicating a zero state, where the zero state characterizes that the user equipment determines a transmitting beam for the user equipment to transmit the SRS over the SRS resource. For example, the indication information includes the information indicating that a transmitting beam for the user equipment to transmit the SRS is not limited by the network device. For example, a particular state of the indication information can be the state 000 in Table 1 to Table 6 (the state of the indication information is represented in a binary system), this is only an example, but the embodiments of the invention will not be limited thereto, and the particular state of the indication information can alternatively be represented as another value, e.g., 111, 00, etc.

Particularly after the transmitting module in the network device transmits the indication information to the user equipment, the user equipment can transmit an SRS over one or more SRS resources currently configured by the network device using any transmitting beam. For example, the network device configures the user equipment with a plurality of SRS resources, and the user equipment transmits an SRS over the different SRS resources using different transmitting beams, that is, the transmitting beams are swept. If the user equipment transmits an SRS over the different SRS resources using different transmitting beams, then a receiver in the network device may receive an SRS using the same receive (Rx) beam to thereby determine an optimum transmitting beam of the user equipment corresponding to the receiving beam of the network device so that the transmitting beams of the user equipment are swept.

In a second implementation, the indication information includes information indicating the user equipment to transmit the SRS over the SRS resource using a transmitting beam in a transmitting beam group and identification information of the transmitting beam indicated by the network device, where the transmitting beam group corresponds to the transmitting beam indicated by the network device. The indication information can be encoded as one code state. For example, one code state in the indication information characterizes that the indication information includes information indicating the user equipment to transmit the SRS over the SRS resource using a transmitting beam in a transmitting beam group and the identification information of the transmitting beam indicated by the network device, where the transmitting beam group corresponds to the transmitting beam indicated by the network device. For example, the code state 1100 of the indication information in Table 3 characterizes a transmitting beam specified by a base station in the indication information as a transmitting beam corresponding to an SRS resource with SRI=5, and that the user equipment should transmit the SRS over the configured SRS resource using a transmitting beam in a transmitting beam group, where the transmitting beam group corresponds to the transmitting beam specified by a base station in the indication information.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 0 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam group corresponding to a transmitting beam indicated by a base station, and the code state 010 of the first indication information, and the code state 1 of the second indication information jointly characterize the transmitting beam specified by the base station in the indication information as a transmitting beam corresponding to an SRS resource with SRI=1, and that the user equipment should transmit an SRS over the configured SRS resource using a transmitting beam in the transmitting beam group, where the transmitting beam group corresponds to the transmitting beam. Particularly after the transmitting module in the network device transmits the indication information to the user equipment, the user equipment transmits an SRS over respective SRS resources using the transmitting beam group corresponding to the transmitting beam indicated by the network device. A mapping relationship between the transmitting beam indicated by the network device, and the transmitting beam group for the user equipment can be determined by the user equipment, or can be pre-agreed by the network device with the user equipment, or can be signaled by the network device to the user equipment. In the case that there are a number of mapping relationships between the transmitting beam indicated by the network device, and the transmitting beam group for the user equipment, the network device can signal one of the mapping relationships to the user equipment, or indicate one of the mapping relationships implicitly in the indication information. For example, the states 1000 to 1010 of the indication information in Table 3 represent a first mapping relationship, and the states 1011 to 1111 represent a second mapping relationship (the mapping relationships are not particularly depicted in the table).

A mapping relationship refers to the transmitting beam indicated by the network device corresponds to a group of transmitting beam with the same width as or the similar width to the transmitting beam indicated by the network device. For example, the network device currently configures the user equipment with N SRS resources, and the user equipment transmits an SRS using N transmitting beams with the same width as the transmitting beam indicated by the network device upon reception of the indication information, where these N transmitting beams may or may not include the transmitting beam currently indicated by the network device. For example, the transmitting beam indicated by the network device is a transmitting beam numbered K, and the user equipment is currently configured with four SRS resources by the network device, so the user equipment transmits an SRS over the four SRS resources respectively using the (K-1)-th, K-th, (K+1)-th, and (K+2)-th transmitting beams respectively. This mapping relationship can apply to beam sweeping at respective levels. For example, in a scenario where there are M transmitting beams in total of the user equipment, the base station configures the user equipment with N SRS resources for beam sweeping at the first level, so the user equipment groups these M transmitting beams into N groups, where the last transmitting beam group includes *M-*(*N*-1)^{∗}┌*M*/*N*┐ transmitting beams, and each other transmitting beam group than the last transmitting beam group includes ┌*M*/*N*┐ transmitting beams (where ┌•┐ represents rounding up). The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with ┌*M*/*N*┐ SRS resources, so the user equipment transmits an SRS over these ┌*M*/*N*┐ SRS resources using a transmitting beam in a transmitting beam group including the transmitting beam corresponding to the n-th SRS resource. In this way, the number of SRS resources for beam sweeping at the respective levels can be reduced to thereby save an overhead, as compared with a large number M of SRS resources configured for the user equipment to perform beam sweeping.

Another mapping relationship refers to that the transmitting beam indicated by the network device corresponds to a narrower transmitting beam group, and the user equipment transmits SRSs over different SRS resources configured for the user equipment using transmitting beams in the transmitting beam group. In this implementation, the user equipment can perform finer local beam sweeping in the transmitting beam group. This mapping relationship can also be regarded as beam sweeping at respective levels. Beam sweeping at the first level can be performed on wider transmitting beams. For example, the base station at the first level configures the user equipment with N SRS resources. The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with K SRS resources, so the user equipment can transmit SRSs over the K SRS resources using a transmitting beam in a directional (narrower) transmitting beam group including K transmitting beams, where the directional (narrower) transmitting beam group corresponds to a transmitting beam corresponding to the n-th SRS resource. If the network device receives these SRSs using the same receiving beam, then transmitting-beam sweeping can be performed in this implementation at a higher precision than beam sweeping at the first level, that is, the network device can receive the SRSs over the SRS resources using the same receiving beam.

In a third implementation, the network device pre-agrees with the user equipment on that the user equipment transmits an SRS over the SRS resource using a transmitting beam in a transmitting beam group , where the indication information includes identification information (e.g., an SRI, particularly as depicted in Table 1) identifying the transmitting beam for transmitting an SRS over the SRS resource, and the transmitting beam group corresponds to a transmitting beam indicated by the network device.

After the transmitting module in the network device transmits the indication information to the user equipment, the user equipment receives the indication information, obtains the identification information of the transmitting beam indicated by the network device, and selects transmitting beams for transmitting an SRS over respective SRS resources according to the identification information under pre-agreed rule. The pre-agreed rule refers to that the user equipment transmits an SRS over the SRS resource using a transmitting beam in a transmitting beam group, where the transmitting beam group corresponds to the transmitting beam indicated by the network device.

The user equipment transmits an SRS over the SRS resource using a transmitting beam in the transmitting beam group, where the transmitting beam group corresponds to the transmitting beam indicated by the network device. A receiver in the network device can receive an SRS using the same receive (Rx) beam to thereby determine an optimum transmitting beam of the user equipment corresponding to the receiving beam of the network device so that the transmitting beams of the user equipment are swept. The same receiving beam can be an optimum receiving beam previously selected by the network device, or can be a receiving beam determined otherwise by the network device.

A mapping relationship between the transmitting beam indicated by the network device for the user equipment, and the transmitting beam group corresponding to the transmitting beam indicated by the network device can be the same as the mapping relationship in the second implementation, so a repeated description thereof will be omitted here. Alike the mapping relationship between the transmitting beam indicated by the network device, and the corresponding transmitting beam group can be determined by the user equipment, or can be pre-agreed on between the network device and the user equipment, or can be signaled by the network device to the user equipment.

In a fourth implementation, the indication information includes information indicating the user equipment to transmit an SRS over the SRS resource using a transmitting beam in a transmitting beam group, where the transmitting beam group corresponds to the transmitting beam indicated by the network device. Particularly the state 10 of the indication information in Table 4 characterizes that the user equipment transmits an SRS using a transmitting beam group corresponding to a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

After a transmitting module in the network device transmits the indication information to the user equipment, the user equipment receives the indication information, obtains the identification information of the transmitting beam indicated by the base station, and transmits an SRS over the SRS resource using a transmitting beam in the transmitting beam group, where the transmitting beam group corresponds to the transmitting beam indicated by the network device.

A mapping relationship between the transmitting beam indicated by the network device for the user equipment and the transmitting beam group corresponding to the transmitting beam can be the same as the mapping relationship in the second implementation, so a repeated description thereof will be omitted here.

In the first implementation to the fourth implementation above, the network device receives the SRSs transmitted by the user equipment over the SRS resources, over the SRS resources using the same receiving beam.

In the second implementation to the fourth implementation above, the mapping relationship between the transmitting beam indicated by the network device, and the corresponding transmitting beam group can be determined by the user equipment, or can be pre-agreed on between the network device and the user equipment, or can be signaled by the network device to the user equipment.

In a fifth implementation, the indication information includes information indicating the user equipment to transmit an SRS over the SRS resource using a transmitting beam indicated by the network device, and identification information of the transmitting beam indicated by the network device. The indication information can be encoded as one code state. For example, one code state in the indication information characterizes that the indication information includes information indicating the user equipment to transmit an SRS over the SRS resource using a transmitting beam indicated by the network device, and identification information of the transmitting beam indicated by the network device. For example, the code state 1100 of the indication information in Table 3 characterizes a transmitting beam specified by a base station in the indication information as a transmitting beam corresponding to an SRS resource with SRI=5, and that the user equipment should transmit an SRS over the configured SRS resource using the transmitting beam.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 1 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam indicated by a base station, and the code state 010 of the first indication information, and the code state 1 of the second indication information jointly characterize the transmitting beam specified by the base station in the indication information as a transmitting beam corresponding to an SRS resource with SRI=1, and that the user equipment should transmit an SRS over the configured SRS resource using the transmitting beam. Particularly the transmitting module in the network device transmits the indication information to the user equipment, and the user equipment receives the indication information, and transmits an SRS over one or more SRS resources currently configured by the network device, using the transmitting beam indicated by the network device.

For example, the indication information further includes identification information of the transmitting beam indicated by the network device, where the identification information is SRI information indicating a state in the indication information, for example, and the SRI indicates the sequence number of an SRS resource for the user equipment to previously transmit an SRS, e.g., the states 001 to 110 in Table 2. After the user equipment determines the SRI information, the user equipment transmits an SRS over all the SRS resources currently configured by the network device using the transmitting beam for the SRS resource corresponding to the SRI. Moreover a plurality of code states can represent the same value of the SRI, and for example, the states 001 and 010 in the indication information can represent SRI=0.

The indication information indicates how the user equipment selects a transmitting beam for transmitting an SRS, and the identification information of the transmitting beam indicated by the network device can be transmitted separately. For example, the network device additionally transmits the SRI information to the user equipment to indicate the transmitting beam for the user equipment.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a sixth implementation, the network device pre-agrees with the user equipment on that the user equipment transmits an SRS over the SRS resource using a transmitting beam indicated by the network device, where the indication information includes identification information (e.g., an SRI, particularly as depicted in Table 1) of the transmitting beam for transmitting the SRS over the SRS resource.

After the transmitting module in the network device transmits the indication information to the user equipment, the user equipment receives the indication information, obtains the identification information of the transmitting beam indicated by the network device, and selects transmitting beams for transmitting an SRS over respective SRS resources, according to the identification information under a pre-agreed rule. The pre-agreed rule refers to that the user equipment transmits an SRS over the SRS resource using a transmitting beam indicated by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a seventh implementation, the indication information includes information indicating the user equipment to transmit the SRS over the SRS resource using a transmitting beam indicated by the network device. Particularly the state 10 of the indication information in Table 4, or the state 01 of the indication information in Table 5 characterizes that the user equipment transmits an SRS over a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

After the transmitting module in the network device transmits the indication information to the user equipment, the user equipment selects a transmitting beam for transmitting an SRS, according to the subsequently obtained SRI information upon reception of the indication information transmitted by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In an eighth implementation, the indication information includes information indicating that the SRS resources configured by the network device groups for the user equipment are grouped, and the network device does not limit any transmitting beam for the user equipment to transmit an SRS, where the information indicates that the network device does not limit any transmitting beam for the user equipment to transmit an SRS, so that the indication information characterizes that the user equipment determines a transmitting beam for the user equipment to transmit an SRS over the SRS resource. Information about grouping of the SRS resources (i.e., how the SRS resources are grouped) can be determined by the user equipment, or can be pre-agreed on between the network device and the user equipment, or can be signaled by the network device to the user equipment.

In the case that the information about grouping of the SRS resources is signaled by the network device to the user equipment, the network device can carry the information about grouping of the SRS resources in the indication information, or can transmit the information about grouping of the SRS resources to the user equipment in another transmission signal than a transmission signal for transmitting the indication information. The transmitting module in the network device transmits the indication information to the user equipment, and the user equipment can transmit an SRS over one or more of the SRS resources currently configured by the network device using any transmitting beam upon reception of the states of the indication information.

For example, the network device pre-agrees with the user equipment on that the SRS resources are grouped according to the number of transmitting beams of the user equipment to be swept and previously reported by the user equipment to the network device, and the number of SRS resources currently configured by the network device. If the network device currently configures M SRS resources, and the number of transmitting beams of the user equipment to be swept and previously reported by the user equipment to the network device is N, then the 1^{st}, 2^{nd}, ..., and N-th SRS resources will be grouped together, the (N+1)-th, (N+2)-th, ..., and 2N-th SRS resources will be grouped together, and so on.

When the indication information includes the information indicating that the SRS resources configured by the network device for the user equipment are grouped, the user equipment can transmit the SRSs over different SRS resources in the same SRS resource group using different transmitting beams so that the transmitting beams are swept, regardless of how the user equipment obtains the information about grouping of the SRS resources (for example, the information about grouping of the SRS resources can be determined by the user equipment, or can be pre-agreed on between the network device and the user equipment, or can be signaled by the network device to the user equipment, or can be obtained by the user equipment as can occur to those skilled in the art). The network device receives the SRSs over the resources included in the same SRS resource group using the same receiving beam, and receives the SRSs over the resources included in different SRS resource groups using different receiving beams.

In this implementation, the receiving beams of the network device, and the transmitting beams of the user equipment can be swept. In another implementation, the network device pre-agrees with the user equipment on a rule of grouping the SRS resources, and the network device signals the number of groups into which the SRS resources configured by the network device for the user equipment to the user equipment. For example, the network device notifies the user equipment that the SRS resources configured for the user equipment are grouped into K groups, so the user equipment determines that the 1^{st}, the 1^{st}, 2^{nd}, ..., and M-th SRS resources will be grouped together (the first one of the K groups in total), the (N+1)-th, (N+2)-th, ..., and 2M-th SRS resources will be grouped together (the second one of the K groups in total), and so on, according to the pre-agreed rule of grouping the SRS resources. Alternatively the state of the indication information includes information about grouping of the SRS resources configured for the user equipment. For example, the states 001 to 010 of the indication information represent only one SRS resource group, and 011 to 100 represent two SRS resource groups (not illustrated in the table).

In the respective particular implementations above of the beam management method, the identification information of the transmitting beam can particularly be the SRS Resource Indicator (SRI) information of the SRS resources configured by the network device for the user equipment.

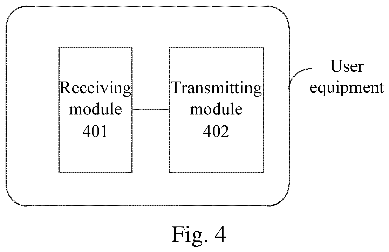

As illustrated in Fig. 4, user equipment according to a fourth embodiment of the invention includes: a receiving module 401 is configured to receive indication information transmitted by a network device, where the indication information indicates the user equipment to select a transmitting beam for transmitting an SRS over an SRS resource configured by the network device for the user equipment; and a transmitting module 402 is configured to determine a transmitting beam for the user equipment to transmit the SRS over the SRS resource, according to the indication information transmitted by the network device, and transmit the SRS over the SRS resource using the transmitting beam.

As the indication information received by the receiving module varies, the user equipment according to this embodiment can operation particularly in the following implementations.

In a first implementation, the indication information includes information indicating a zero state, where the zero state characterizes that the user equipment determines a transmitting beam for the user equipment to transmit the SRS over the SRS resource. For example, the indication information includes the information indicating that a transmitting beam for the user equipment to transmit the SRS is not limited by the network device. For example, a particular state of the indication information can be the state 000 in Table 1 to Table 6 (the state of the indication information is represented in a binary system), this is only an example, but the embodiments of the invention will not be limited thereto, and the particular state of the indication information can alternatively be represented as another value, e.g., 111, 00, etc.

Particularly the transmitting module in the user equipment can transmit an SRS using any transmitting beam over one or more SRS resources currently configured by the network device after the receiving module in the user equipment receives the indication information transmitted by the network device.

For example, the network device configures the user equipment with a plurality of SRS resources, and the user equipment transmits an SRS over the different SRS resources using different transmitting beams, that is, the transmitting beams are swept. If the user equipment transmits an SRS over the different SRS resources using different transmitting beams, then a receiver in the network device may receive an SRS using the same receive (Rx) beam to thereby determine an optimum transmitting beam of the user equipment corresponding to the receiving beam of the network device so that the transmitting beams of the user equipment are swept.

In a second implementation, the indication information includes information indicating the user equipment to transmit the SRS over the SRS resource using a transmitting beam in a transmitting beam group and identification information of the transmitting beam indicated by the network device, where the transmitting beam group corresponds to the transmitting beam indicated by the network device. The indication information can be encoded as one code state. For example, one code state in the indication information characterizes that the indication information includes information indicating the user equipment to transmit the SRS over the SRS resource using a transmitting beam in a transmitting beam group and the identification information of the transmitting beam indicated by the network device, where the transmitting beam group corresponds to the transmitting beam indicated by the network device. For example, the code state 1100 of the indication information in Table 3 characterizes a transmitting beam specified by a base station in the indication information as a transmitting beam corresponding to an SRS resource with SRI=5, and that the user equipment should transmit the SRS over the configured SRS resource using a transmitting beam in a transmitting beam group, where the transmitting beam group corresponds to the transmitting beam specified by a base station in the indication information.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 0 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam group corresponding to a transmitting beam indicated by a base station, and the code state 010 of the first indication information, and the code state 1 of the second indication information jointly characterize the transmitting beam specified by the base station in the indication information as a transmitting beam corresponding to an SRS resource with SRI=1, and that the user equipment should transmit the SRS over the configured SRS resource using a transmitting beam in the transmitting beam group corresponding to the transmitting beam. Particularly the user equipment transmits an SRS over respective SRS resources using the transmitting beam group corresponding to the transmitting beam indicated by the network device after the receiving module in the user equipment receives the indication information transmitted by the network device. For example, the transmitting module in the user equipment transmits an SRS over the SRS resources using transmitting beams in the transmitting beam group, where the transmitting beam group corresponds to the transmitting beam indicated by the network device.

A mapping relationship between the transmitting beam indicated by the network device, and the transmitting beam group for the user equipment can be determined by the user equipment, or can be pre-agreed on by the user equipment with the network device, or can be received by the user equipment from the network device via signaling. In the case that there are a number of mapping relationships between the transmitting beam indicated by the network device, and the transmitting beam group for the user equipment, the network device can signal one of the mapping relationships to the user equipment, or indicate one of the mapping relationships implicitly in the indication information. For example, the states 1000 to 1010 of the indication information in Table 3 represent a first mapping relationship, and the states 1011 to 1111 represent a second mapping relationship (the mapping relationships are not particularly depicted in the table).

A mapping relationship refers to the transmitting beam indicated by the network device corresponds to a group of transmitting beam with the same width as or the similar width to the transmitting beam indicated by the network device. For example, the network device currently configures the user equipment with N SRS resources, and the user equipment transmits an SRS using N transmitting beams with the same width as the transmitting beam indicated by the network device upon reception of the indication information, where these N transmitting beams may or may not include the transmitting beam currently indicated by the network device. For example, the transmitting beam indicated by the network device is a transmitting beam numbered K, and the user equipment is currently configured with four SRS resources by the network device, so the user equipment transmits an SRS over the four SRS resources respectively using the (K-1)-th, K-th, (K+1)-th, and (K+2)-th transmitting beams respectively. This mapping relationship can apply to beam sweeping at respective levels. For example, in a scenario where there are M transmitting beams in total of the user equipment, the base station configures the user equipment with N SRS resources for beam sweeping at the first level, so the user equipment groups these M transmitting beams into N groups, where the last transmitting beam group includes *M-*(*N*-1)^{∗}┌*M*/*N*┐ transmitting beams, and each other transmitting beam group than the last transmitting beam group includes ┌*M* / *N*┐ transmitting beams (where ┌•┐ represents rounding up). The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with ┌*M*/*N*┐ SRS resources, so the user equipment transmits an SRS over these ┌*M*/*N*┐ SRS resources using a transmitting beam in a transmitting beam group including the transmitting beam corresponding to the n-th SRS resource. In this way, the number of SRS resources for beam sweeping at the respective levels can be reduced to thereby save an overhead, as compared with a large number M of SRS resources configured for the user equipment to perform beam sweeping.

Another mapping relationship refers to that the transmitting beam indicated by the network device corresponds to a narrower transmitting beam group, and the user equipment transmits SRSs over different SRS resources configured for the user equipment using transmitting beams in the transmitting beam group. In this implementation, the user equipment can perform finer local beam sweeping in the transmitting beam group. This mapping relationship can also be regarded as beam sweeping at respective levels. Beam sweeping at the first level can be performed on wider transmitting beams. For example, the base station at the first level configures the user equipment with N SRS resources. The user equipment selects one of transmitting beams in each transmitting beam group, and transmits an SRS over one of the SRS resources using the transmitting beam. Upon reception of these SRSs, the network device transmits the indication information including SRI=n (e.g., SRI=5 in Table 3) to the user equipment, where the indication information indicates a transmitting beam corresponding to the n-th SRS resource, and configures the user equipment with K SRS resources, so the user equipment can transmit SRSs over the K SRS resources using a transmitting beam in a directional (narrower) transmitting beam group including K transmitting beams, where the directional (narrower) transmitting beam group corresponds to a transmitting beam corresponding to the n-th SRS resource. If the network device receives these SRSs using the same receiving beam, then transmitting-beam sweeping can be performed in this implementation at a higher precision than beam sweeping at the first level, that is, the network device can receive the SRSs over the SRS resources using the same receiving beam.

In a third implementation, the user equipment pre-agrees with the network device on that the user equipment transmits an SRS over the SRS resource using a transmitting beam in a transmitting beam group, , where the indication information includes identification information (e.g., an SRI, particularly as depicted in Table 1) identifying the transmitting beam for transmitting an SRS over the SRS resource, and the transmitting beam group corresponds to a transmitting beam indicated by the network device.

After the receiving module in the user equipment receives the indication information transmitted by the network device, the user equipment obtains the identification information of the transmitting beam indicated by the network device, and selects transmitting beams for transmitting an SRS over respective SRS resources, according to the identification information under a rule which is agreed on in advance. The pre-agreed rule refers to that the user equipment transmits an SRS over the SRS resource using a transmitting beam in a transmitting beam group, where the transmitting beam group corresponds to the transmitting beam indicated by the network device.

The transmitting module in the user equipment transmits an SRS over the SRS resource using a transmitting beam in the transmitting beam group, where the transmitting beam group corresponds to the transmitting beam indicated by the network device. A receiver in the network device can receive an SRS using the same receive (Rx) beam to thereby determine an optimum transmitting beam of the user equipment corresponding to the receiving beam of the network device so that the transmitting beams of the user equipment are swept. The same receiving beam can be an optimum receiving beam previously selected by the network device, or can be a receiving beam determined otherwise by the network device.

A mapping relationship between the transmitting beam indicated by the network device for the user equipment, and the transmitting beam group corresponding to the transmitting beam indicated by the network device can be the same as the mapping relationship in the second implementation according to this embodiment, so a repeated description thereof will be omitted here. Alike the mapping relationship between the transmitting beam indicated by the network device, and the corresponding transmitting beam group can be determined by the user equipment, or can be pre-agreed on between the network device and the user equipment, or can be signaled by the network device to the user equipment.

In a fourth implementation, the indication information includes information indicating the user equipment to transmit an SRS over the SRS resource using a transmitting beam in a transmitting beam group, where the transmitting beam group corresponds to a transmitting beam indicated by the network device. Particularly the state 10 of the indication information in Table 4 characterizes that the user equipment transmits an SRS using a transmitting beam group corresponding to a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

Particularly after the receiving module in the user equipment receives the indication information transmitted by the network device, the user equipment further receives the SRI information transmitted by the base station, and the transmitting module in the user equipment transmits an SRS over the SRS resource using a transmitting beam in the transmitting beam group, where the transmitting beam group corresponds to the transmitting beam indicated by the network device.

A mapping relationship between the transmitting beam indicated by the network device for the user equipment, and the transmitting beam group corresponding to the transmitting beam can be the same as the mapping relationship in the second implementation according to this embodiment, so a repeated description thereof will be omitted here. Alike the mapping relationship between the transmitting beam indicated by the network device, and the corresponding transmitting beam group can be determined by the user equipment, or can be pre-agreed on between the network device and the user equipment, or can be signaled by the network device to the user equipment.

In the second implementation to the fourth implementation, the user equipment transmits an SRS over the SRS resource using a transmitting beam in the transmitting beam group, where the transmitting beam group corresponds to the transmitting beam indicated by the network device.

In the first implementation to the fourth implementation, the network device receives the SRSs transmitted by the user equipment over the SRS resources, over the SRS resources using the same receiving beam.

In the second implementation to the fourth implementation, the mapping relationship between the transmitting beam indicated by the network device, and the corresponding transmitting beam group can be determined by the user equipment, or can be pre-agreed on between the network device and the user equipment, or can be signaled by the network device to the user equipment.

In a fifth implementation, the indication information includes information indicating the user equipment to transmit an SRS over the SRS resource using a transmitting beam indicated by the network device, and identification information of the transmitting beam indicated by the network device. The indication information can be encoded as one code state. For example, one code state in the indication information characterizes that the indication information includes information indicating the user equipment to transmit an SRS over the SRS resource using a transmitting beam indicated by the network device, and identification information of the transmitting beam indicated by the network device. For example, the code state 1100 of the indication information in Table 3 characterizes a transmitting beam specified by a base station in the indication information as a transmitting beam corresponding to an SRS resource with SRI=5, and that the user equipment should transmit an SRS over the configured SRS resource using the transmitting beam.

Alternatively the indication information can include two components, i.e., first indication information and second indication information, and the network device can transmit the first indication information and the second indication information to the user equipment concurrently or sequentially, where firstly the first indication information and the second indication information, or firstly the second indication information and the first indication information can be transmitted. The first indication information can be the code state 0 in Table 6, and the second indication information can be one of the code states 001 to 010 in Table 1. Particularly for example, the code state 010 of the first indication information characterizes SRI=1, the code state 1 of the second indication information characterizes that the user equipment uses a transmitting beam indicated by a base station, and the code state 010 of the first indication information, and the code state 1 of the second indication information jointly characterize the transmitting beam specified by the base station in the indication information as a transmitting beam corresponding to an SRS resource with SRI=1, and that the user equipment should transmit an SRS over the configured SRS resource using the transmitting beam.

Particularly the receiving module in the user equipment receives the indication information transmitted by the network device, and the transmitting module in the user equipment transmits an SRS over one or more SRS resources currently configured by the network device, using the transmitting beam indicated by the network device.

For example, the indication information further includes identification information of the transmitting beam indicated by the network device, where the identification information is SRI information indicating a state in the indication information, for example, and the SRI indicates the sequence number of an SRS resource for the user equipment to previously transmit an SRS, e.g., the states 001 to 110 in Table 2. After the user equipment determines the SRI information, the user equipment transmits an SRS over all the SRS resources currently configured by the network device using the transmitting beam for the SRS resource corresponding to the SRI. Moreover a plurality of code states can represent the same value of the SRI, and for example, the states 001 and 010 in the indication information can represent SRI=0.

The indication information indicates how the user equipment selects a transmitting beam for transmitting an SRS, and the identification information of the transmitting beam indicated by the network device can be transmitted separately. For example, the network device additionally transmits the SRI information to the user equipment to indicate the transmitting beam for the user equipment.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a sixth implementation, the user equipment pre-agrees with the network device on that the user equipment transmits an SRS over the SRS resource using a transmitting beam indicated by the network device, where the indication information includes identification information (e.g., an SRI, particularly as depicted in Table 1) of the transmitting beam for transmitting the SRS over the SRS resource.

After the receiving module in the user equipment receives the indication information transmitted by the network device, the user equipment obtains the identification information of the transmitting beam indicated by the network device, and selects transmitting beams for transmitting an SRS over respective SRS resources, according to the identification information under a pre-agreed rule. The pre-agreed rule refers to that the user equipment transmits an SRS over the SRS resource using a transmitting beam indicated by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In a seventh implementation, the indication information includes information indicating the user equipment to transmit the SRS over the SRS resource using a transmitting beam indicated by the network device. Particularly the state 10 of the indication information in Table 4, or the state 01 of the indication information in Table 5 characterizes that the user equipment transmits an SRS over a specified transmitting beam, but the indication information does not carry any SRI information.

The indication information does not carry any identification information (e.g., SRI information) of the transmitting beam indicated by the network device, and the identification information (e.g., SRI information) of the transmitting beam indicated by the network device can be transmitted otherwise by the network device to the user equipment. For example, a base station transmits the SRI information separately to the user equipment to characterize the identification information of the transmitting beam for the user equipment.

The user equipment selects a transmitting beam for transmitting an SRS, according to the subsequently obtained SRI information after the receiving module in the user equipment receives the indication information transmitted by the network device.

The network device receives the SRSs transmitted by the user equipment over the SRS resources, over the SRS resources using different receiving beams. If the network device receives the SRSs over a plurality of SRS resources currently configured for the user equipment using different receiving beams, then the network device may sweep the receiving beams for the transmitting beam of the user equipment indicated by the network device.

In an eighth implementation, the indication information includes information indicating that the SRS resources configured by the network device groups for the user equipment are grouped, and the network device does not limit any transmitting beam for the user equipment to transmit an SRS, where the information indicates that the network device does not limit any transmitting beam for the user equipment to transmit an SRS, so that the indication information characterizes that the user equipment determines a transmitting beam for the user equipment to transmit an SRS over the SRS resource. Information about grouping of the SRS resources (i.e., how the SRS resources are grouped) can be determined by the user equipment, or can be pre-agreed on between the network device and the user equipment, or can be signaled by the network device to the user equipment.

In the case that the information about grouping of the SRS resources is signaled by the network device to the user equipment, the network device can carry the information about grouping of the SRS resources in the indication information, or can transmit the information about grouping of the SRS resources to the user equipment in another transmission signal than a transmission signal for transmitting the indication information. The transmitting module in the user equipment can transmit an SRS over one or more of the SRS resources currently configured by the network device using any transmitting beam after the user equipment receives the states of the indication information.

For example, the user equipment pre-agrees with the network device on that the SRS resources are grouped according to the number of transmitting beams of the user equipment to be swept and previously reported by the user equipment to the network device, and the number of SRS resources currently configured by the network device. If the network device currently configures M SRS resources, and the number of transmitting beams of the user equipment to be swept and previously reported by the user equipment to the network device is N, then the 1^{st}, 2^{nd}, ..., and N-th SRS resources will be grouped together, the (N+1)-th, (N+2)-th, ..., and 2N-th SRS resources will be grouped together, and so on.

When the indication information includes the information indicating that the SRS resources configured by the network device for the user equipment are grouped, the user equipment can transmit the SRSs over different SRS resources in the same SRS resource group using different transmitting beams so that the transmitting beams are swept, regardless of how the user equipment obtains the information about grouping of the SRS resources (for example, the information about grouping of the SRS resources can be determined by the user equipment, or can be pre-agreed on between the network device and the user equipment, or can be signaled by the network device to the user equipment, or can be obtained by the user equipment as can occur to those skilled in the art). The network device receives the SRSs over the resources included in the same SRS resource group using the same receiving beam, and receives the SRSs over the resources included in different SRS resource groups using different receiving beams.

In this implementation, the receiving beams of the network device, and the transmitting beams of the user equipment can be swept. In another implementation, the user equipment pre-agrees with the network device on a rule of grouping the SRS resources, and the network device signals the number of groups into which the SRS resources configured by the network device for the user equipment to the user equipment. For example, the network device notifies the user equipment that the SRS resources configured for the user equipment are grouped into K groups, so the user equipment determines that the 1^{st}, the 1^{st}, 2^{nd}, ..., and M-th SRS resources will be grouped together (the first one of the K groups in total), the (N+1)-th, (N+2)-th, ..., and 2M-th SRS resources will be grouped together (the second one of the K groups in total), and so on, according to the pre-agreed rule of grouping the SRS resources. Alternatively the state of the indication information includes information about grouping of the SRS resources configured for the user equipment. For example, the states 001 to 010 of the indication information represent only one SRS resource group, and 011 to 100 represent two SRS resource groups (not illustrated in the table).

In the respective particular implementations above of the beam management method, the identification information of the transmitting beam can particularly be the SRS Resource Indicator (SRI) information of the SRS resources configured by the network device for the user equipment.

An embodiment of the invention provides a computer device including a processor configured to execute computer program stored in a memory to perform the steps of the method according to the first embodiment or the second embodiment.

An embodiment of the invention provides a computer readable storage medium storing computer program configured, upon being executed by a processor, to perform the steps of the method according to the first embodiment or the second embodiment.

All the transmitting beams in Tables 1 to 6 are transmitting beams for the user equipment to transmit an SRS, and one or more code states in the indication information in Tables 1 to 6 is or are a binary code or codes. One or more code states of the indication information in Tables 1 to 6 can be a combination of code states in different tables, or can be only a part of one of the tables. Tables 1 to 6 are only examples, but the definitions of the indication information in the embodiments of the invention can alternatively be represented as other binary codes as needed in a real application. For example, the transmitting beams in Tables 1 to 6 can be transmitting beams for the user equipment to transmit an SRS to the base station over SRS resources.

**Table 1**

| Indication information | Definition |
|---|---|
| 000 | No transmitting beam of the user equipment is specified |
| 001 | SRI=0 |
| 010 | SRI=1 |
| 011 | SRI=2 |
| 100 | SRI=3 |
| 101 | SRI=4 |
| 110 | SRI=5 |
| 111 | Reserved (not used temporarily) |

**Table 2**

| Indication information | Definition |
|---|---|
| 000 | No transmitting beam of the user equipment is specified |
| 001 | The user equipment transmits an SRS using a specified transmitting beam, where SRI=0 |
| 010 | The user equipment transmits an SRS using a specified transmitting beam, where SRI=1 |
| 011 | The user equipment transmits an SRS using a specified transmitting beam, where SRI=2 |
| 100 | The user equipment transmits an SRS using a specified transmitting beam, where SRI=3 |
| 101 | The user equipment transmits an SRS using a specified transmitting beam, where SRI=4 |
| 110 | The user equipment transmits an SRS using a specified transmitting beam, where SRI=5 |
| 111 | Reserved (not used temporarily) |

**Table 3**

| Indication information | Definition |
|---|---|
| 0000 | No transmitting beam of the user equipment is specified |
| 0001 | The user equipment transmits an SRS using a transmitting beam group corresponding to a specified transmitting beam, where SRI=0 |
| 0010 | The user equipment transmits an SRS using a transmitting beam group corresponding to a specified transmitting beam, where SRI=1 |
| 0011 | The user equipment transmits an SRS using a transmitting beam group corresponding to a specified transmitting beam, where SRI=2 |
| ...... | ...... |
| 0110 | The user equipment transmits an SRS using a transmitting beam group corresponding to a specified transmitting beam, where SRI=5 |
| 0111 | The user equipment transmits an SRS using a specified transmitting beam, where SRI = 0 |
| ...... | ...... |
| 1100 | The user equipment transmits an SRS using a specified transmitting beam, where SRI = 5 |
| 1101-1111 | Reserved (not used temporarily) |

**Table 4**

| Indication information | Definition |
|---|---|
| 00 | No transmitting beam of the user equipment is specified |
| 01 | The user equipment transmits an SRS using a specified transmitting beam |
| 10 | The user equipment transmits an SRS using a transmitting beam group corresponding to a specified transmitting beam |
| 11 | Reserved (not used temporarily) |

**Table 5**

| Indication information | Definition |
|---|---|
| 00 | No transmitting beam of the user equipment is specified |
| 01 | The user equipment transmits an SRS using a specified transmitting beam |
| 10 | Reserved (not used temporarily) |
| 11 | Reserved (not used temporarily) |

**Table 6**

| Indication information | Definition |
|---|---|
| 0 | The user equipment transmits an SRS using a transmitting beam group corresponding to a specified transmitting beam |
| 1 | The user equipment transmits an SRS using a specified transmitting beam |

The technical solutions according to the embodiments above of the invention have at least the following technical effects or advantages: the network side transmits to the user equipment the indication information of a transmitting beam for transmitting an SRS so that sweeping of transmitting beams by the user equipment, and sweeping of receiving beams by the base station can be controlled flexibly to thereby facilitate beam management at the network side on the user equipment.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A beam management method, the method being applicable to a network device, and comprising:
configuring, by the network device, user equipment with a Sounding Reference Signal (SRS) resource; and
transmitting, by the network device, indication information to the user equipment to indicate the user equipment to select a transmitting beam for transmitting an SRS over the SRS resource.

2. The method according to claim 1, wherein the indication information comprises information indicating a zero state, and the zero state characterizes that the user equipment determines the transmitting beam for the user equipment to transmit the SRS over the SRS resource.

3. The method according to claim 1, wherein the indication information comprises information indicating the user equipment to transmit the SRS over the SRS resource according to a transmitting beam indicated by the network device.

4. The method according to claim 3, wherein the information indicating the user equipment to transmit the SRS over the SRS resource according to the transmitting beam indicated by the network device comprises information indicating the user equipment to transmit the SRS over the SRS resource using a transmitting beam in a transmitting beam group, wherein the transmitting beam group corresponds to the transmitting beam indicated by the network device.

5. The method according to claim 3, wherein the information indicating the user equipment to transmit the SRS over the SRS resource according to the transmitting beam indicated by the network device comprises information indicating the user equipment to transmit the SRS over the SRS resource using the transmitting beam indicated by the network device.

6. The method according to claim 4 or 5, wherein the indication information further comprises identification information of the transmitting beam indicated by the network device.

7. The method according to claim 6, wherein the indication information is encoded as one code state.

8. The method according to claim 1, wherein the method further comprises: pre-agreeing by the network device with the user equipment on that the user equipment transmits the SRS over the SRS resource using a transmitting beam in a transmitting beam group, wherein the indication information comprises identification information of the transmitting beam for transmitting an SRS over the SRS resource, and the transmitting beam group corresponds to a transmitting beam indicated by the network device.

9. The method according to claim 1, wherein the method further comprises: pre-agreeing by the network device with the user equipment on that the user equipment transmits the SRS over the SRS resource using a transmitting beam indicated by the network device, wherein the indication information comprises identification information of the transmitting beam for transmitting the SRS over the SRS resource.

10. The method according to any one of claims 2, 4, and 8, wherein the method further comprises: receiving, by the network device, the SRSs transmitted by the user equipment over the SRS resources, over the SRS resources using a same receiving beam.

11. The method according to claim 5 or 9, wherein the method further comprises: receiving, by the network device, the SRSs transmitted by the user equipment over the SRS resources, over the SRS resources using different receiving beams.

12. The method according to claim 2, wherein the indication information further indicates that the SRS resources configured by the network device for the user equipment are grouped.

13. The method according to claim 12, wherein the method further comprises:
receiving, by the network device, the SRSs over the SRS resources in a same group using a same receiving beam, and receiving the SRSs over the SRS resources in different groups using different receiving beams.

14. The method according to any one of claims 6 to 9, wherein the identification information of the transmitting beam is SRS Resource Indicator (SRI) information of the SRS resources configured by the network device for the user equipment.

15. A beam management method, the method being applicable to user equipment, and comprising:
receiving, by the user equipment, indication information transmitted by a network device, wherein the indication information indicates the user equipment to select a transmitting beam for transmitting an SRS over a Sounding Reference Signal (SRS) resource configured by the network device for the user equipment;
determining, by the user equipment, a transmitting beam for the user equipment to transmit the SRS over the SRS resource, according to the indication information transmitted by the network device; and transmitting the SRS over the SRS resource using the transmitting beam.

16. The method according to claim 15, wherein the indication information comprises information indicating a zero state, and the zero state characterizes that the user equipment determines the transmitting beam for the user equipment to transmit the SRS over the SRS resource.

17. The method according to claim 16, wherein the transmitting, by the user equipment, an SRS over the SRS resource using the transmitting beam comprises:
transmitting, by the user equipment, SRSs over the different SRS resources using different transmitting beams.

18. The method according to claim 16, wherein the indication information comprises information indicating the user equipment to transmit the SRS over the SRS resource according to a transmitting beam indicated by the network device.

19. The method according to claim 16, wherein the information indicating the user equipment to transmit the SRS over the SRS resource according to the transmitting beam indicated by the network device comprises information indicating the user equipment to transmit the SRS over the SRS resource using a transmitting beam in a transmitting beam group, wherein the transmitting beam group corresponds to the transmitting beam indicated by the network device.

20. The method according to claim 18, wherein the information indicating the user equipment to transmit the SRS over the SRS resource according to the transmitting beam indicated by the network device comprises information indicating the user equipment to transmit the SRS over the SRS resource using the transmitting beam indicated by the network device.

21. The method according to claim 19 or 20, wherein the indication information further comprises identification information of the transmitting beam indicated by the network device.

22. The method according to claim 21, wherein the indication information is encoded as one code state.

23. The method according to claim 15, wherein the method further comprises: pre-agreeing by the user equipment with the network device on that the user equipment transmits the SRS over the SRS resource using a transmitting beam in a transmitting beam group, wherein the indication information comprises identification information of the transmitting beam for transmitting an SRS over the SRS resource, and the transmitting beam group corresponds to a transmitting beam indicated by the network device.

24. The method according to claim 15, wherein the method further comprises: pre-agreeing by the user equipment with the network device on that the user equipment transmits the SRS over the SRS resource using a transmitting beam indicated by the network device, wherein the indication information comprises identification information of the transmitting beam for transmitting the SRS over the SRS resource.

25. The method according to any one of claims 19, 21, and 23, wherein the user equipment transmits an SRS over the SRS resource using a transmitting beam in a transmitting beam group, wherein the transmitting beam group corresponds to the transmitting beam indicated by the network device.

26. The method according to claim 16, wherein the indication information further indicates that the SRS resources configured by the network device for the user equipment are grouped.

27. The method according to claim 26, wherein the user equipment transmits SRSs over different SRS resources in a same SRS resource group using different receiving beams.

28. A network device for managing a beam, the network device comprising:
a configuring module configured to configure user equipment with a Sounding Reference Signal (SRS) resource; and
a transmitting module configured to transmit indication information to the user equipment to indicate the user equipment to select a transmitting beam for transmitting an SRS over the SRS resource.

29. The network device according to claim 28, wherein the indication information comprises information indicating a zero state, and the zero state characterizes that the user equipment determines the transmitting beam for the user equipment to transmit the SRS over the SRS resource.

30. The network device according to claim 28, wherein the indication information comprises information indicating the user equipment to transmit the SRS over the SRS resource according to a transmitting beam indicated by the network device.

31. The network device according to claim 30, wherein the information indicating the user equipment to transmit the SRS over the SRS resource according to the transmitting beam indicated by the network device comprises information indicating the user equipment to transmit the SRS over the SRS resource using a transmitting beam in a transmitting beam group, wherein the transmitting beam group corresponds to the transmitting beam indicated by the network device.

32. The network device according to claim 30, wherein the information indicating the user equipment to transmit the SRS over the SRS resource according to the transmitting beam indicated by the network device comprises information indicating the user equipment to transmit the SRS over the SRS resource using the transmitting beam indicated by the network device.

33. The network device according to claim 31 or 32, wherein the indication information further comprises identification information of the transmitting beam indicated by the network device.

34. The network device according to claim 33, wherein the indication information is encoded as one code state.

35. The network device according to claim 28, wherein the network device pre-agrees with the user equipment on that the user equipment transmits the SRS over the SRS resource using a transmitting beam in a transmitting beam group, wherein the indication information comprises identification information of the transmitting beam for transmitting the SRS over the SRS resource, and the transmitting beam group corresponds to a transmitting beam indicated by the network device.

36. The network device according to claim 28, wherein the network device pre-agrees with the user equipment on that the user equipment transmits the SRS over the SRS resource using a transmitting beam indicated by the network device, wherein the indication information comprises identification information of the transmitting beam for transmitting the SRS over the SRS resource.

37. The network device according to claim 29, wherein the indication information further indicates that the SRS resources configured by the network device for the user equipment are grouped.

38. User equipment, comprising:
a receiving module configured to receive indication information transmitted by a network device, wherein the indication information indicates the user equipment to select a transmitting beam for transmitting a Sounding Reference Signal (SRS) over an SRS resource configured by the network device for the user equipment; and
a transmitting module configured to determine a transmitting beam for the user equipment to transmit the SRS over the SRS resource, according to the indication information transmitted by the network device, and to transmit the SRS over the SRS resource using the transmitting beam.

39. The user equipment according to claim 38, wherein the indication information comprises information indicating a zero state, and the zero state characterizes that the user equipment determines a transmitting beam for the user equipment to transmit the SRS over the SRS resource.

40. The user equipment according to claim 38, wherein the indication information comprises information indicating the user equipment to transmit the SRS over the SRS resource according to a transmitting beam indicated by the network device.

41. The user equipment according to claim 40, wherein the information indicating the user equipment to transmit the SRS over the SRS resource according to the transmitting beam indicated by the network device comprises information indicating the user equipment to transmit the SRS over the SRS resource using a transmitting beam in a transmitting beam group, wherein the transmitting beam group corresponds to the transmitting beam indicated by the network device.

42. The user equipment according to claim 40, wherein the information indicating the user equipment to transmit the SRS over the SRS resource according to the transmitting beam indicated by the network device comprises information indicating the user equipment to transmit the SRS over the SRS resource using the transmitting beam indicated by the network device.

43. The user equipment according to claim 41 or 42, wherein the indication information further comprises identification information of the transmitting beam indicated by the network device.

44. The user equipment according to claim 43, wherein the indication information is encoded as one code state.

45. The user equipment according to claim 38, wherein the user equipment pre-agrees with the network device on that the user equipment transmits the SRS over the SRS resource using a transmitting beam in a transmitting beam group, wherein the indication information comprises identification information of the transmitting beam for transmitting an SRS over the SRS resource, and the transmitting beam group corresponds to a transmitting beam indicated by the network device.

46. The user equipment according to claim 38, wherein the user equipment pre-agrees with the network device on that the user equipment transmits the SRS over the SRS resource using a transmitting beam indicated by the network device, wherein the indication information comprises identification information of the transmitting beam for transmitting the SRS over the SRS resource.

47. The user equipment according to claim 39, wherein the indication information further indicates that the SRS resources configured by the network device for the user equipment are grouped.

48. A computer device, comprising a processor and a memory, wherein the processor is configured to execute computer program stored in the memory to:
configure user equipment with a Sounding Reference Signal (SRS) resource; and
transmit indication information to the user equipment to indicate the user equipment to select a transmitting beam for transmitting an SRS over the SRS resource.

49. A computer device, comprising a processor and a memory, wherein the processor is configured to execute computer program stored in the memory to:
receive indication information transmitted by a network device, wherein the indication information indicates the user equipment to select a transmitting beam for transmitting an SRS over a Sounding Reference Signal (SRS) resource configured by the network device for the user equipment; and
determine a transmitting beam for the user equipment to transmit the SRS over the SRS resource, according to the indication information transmitted by the network device, and transmit the SRS over the SRS resource using the transmitting beam.

50. A computer readable storage medium, storing computer program configured, upon being executed by a processor, to perform the method according to any one of claims 1 to 27.
